# EUROPEAN PATENT APPLICATION

(11) **EP 4 274 310 A1**
(43) Date of publication of application: **08.11.2023**
(21) Application number: 21920313.0
(22) Date of filing: 22.01.2021
(51) Int. Cl.: H04W 48/18

(54) **NETWORK INTERCOMMUNICATION METHOD AND APPARATUS**

(71) Applicant: Huawei Technologies Co., Ltd., Shenzhen, Guangdong 518129 (CN)
(72) Inventor: QIANG, Li, Shenzhen, Guangdong 518129 (CN); YANG, Linping, Shenzhen, Guangdong 518129 (CN)
(74) Representative: Isarpatent
(86) International application number: PCT/CN2021/073378
(87) International publication number: WO 2022/155915

(57) **Abstract**

A network interworking method and an apparatus are disclosed, and relate to the field of communication technologies, to enhance, in an architecture in which a first network interworks with a second network, control of the first network over access of a terminal device to the second network. The method includes: A first access management network element in the first network receives identifier information that is of a first slice and that is sent by the terminal device, where the first slice is a slice related to a service in the second network. The first access management network element requests, based on the identifier information of the first slice, a second access management network element in the second network to access the second network.

## Description

### TECHNICAL FIELD

This application relates to the field of communication technologies, and in particular, to a network interworking method and an apparatus.

### BACKGROUND

Currently, in an architecture in which a first network interworks with a second network, a terminal device located in coverage of the first network may access the second network via the first network. However, the first network cannot learn whether the terminal device accesses the network, and cannot control whether the terminal device can access the network. A corresponding solution to this problem has not provided in the industry.

### SUMMARY

This application provides a network interworking method and an apparatus, to enhance, in an architecture in which a first network interworks with a second network, control of the first network over access of a terminal device to the second network.

According to a first aspect, a network interworking method is provided. The method includes: A first access management network element in a first network receives identifier information that is of a first slice and that is sent by a terminal device, where the first slice is a slice related to a service in a second network. The first access management network element requests, based on the identifier information of the first slice, a second access management network element in the second network to access the second network.

Based on the foregoing technical solution, the first access management network element receives the identifier information that is of the first slice and that is sent by the terminal device. Because the first slice is the slice related to the service in the second network, the first access management network element may learn, based on the identifier information of the first slice, that the terminal device wants to access the second network. Therefore, the first access management network element in the first network requests the second access management network element in the second network to access the second network. It can be learned that the first access management network element in the first network may learn that the terminal device wants to access the second network, and may further control the terminal device to access the second network. According to the technical solution provided in this application, control of the first network over access of the terminal device to the second network can be enhanced.

In addition, in a conventional technology, the terminal device and the second network may directly exchange information, and the first network is only responsible for transparently transmitting the information exchanged between the terminal device and the second network. Therefore, the terminal device needs to establish an internet protocol security (internet protocol security, IPsec) tunnel with a security gateway (for example, a non-3GPP interworking function (non-3GPP interworking function, N3IWF) network element) in the second network, to ensure communication security. In the technical solution provided in this application, the first access management network element requests to access the second network on behalf of the terminal device, and the terminal device does not directly exchange information with the second network. Therefore, the terminal device does not need to establish the IPsec tunnel with the security gateway (for example, the N3IWF), and the terminal device does not need to support an IPsec protocol stack, so that manufacturing costs of the terminal device are reduced.

In a possible design, the method further includes: The first access management network element obtains first identity information. The first access management network element sends second identity information to the second access management network element. The first identity information is for identifying the terminal device in the first network, and the first identity information is different from the second identity information. It should be understood that because the first identity information is for identifying the terminal device in the first network, a network element in the second network may not be capable of identifying the first identity information. Therefore, the first access management network element sends the second identity information to the second access management network element, to communicate with the second access management network element by using the second identity information. Correspondingly, the second access management network element may consider the first access management network element that uses the second identity information as a common terminal device to perform access management.

In a possible design, the first identity information is an international mobile subscriber identity (international mobile subscriber identity, IMSI), a subscription permanent identifier (subscription permanent identifier, SUPI), a subscription concealed identifier (subscription concealed identifier, SUCI), or a globally unique temporary user equipment (user equipment, UE) identity (globally unique temporary UE identity, GUTI). The second identity information is an IMSI, an SUPI, an SUCI, or a GUTI.

In a possible design, the method further includes: The first access management network element establishes an association relationship between the first identity information and the second identity information. In this way, the first access management network element may achieve an objective of communicating with the second network on behalf of the terminal device. For example, based on the association relationship between the first identity information and the second identity information, after receiving, from a related network element (for example, the second access management network element) in the second network, a message A related to the second identity information, the first access management network element may parse the message A to obtain content carried in the message A, encapsulate all or a part of the content carried in the message A into a message B, and send the message B to the terminal device. For another example, based on the association relationship between the first identity information and the second identity information, after receiving a message C that is related to the first slice and that is sent by the terminal device, the first access management network element may parse the message C to obtain content carried in the message C, encapsulate all or a part of the content carried in the message C into a message D, and send the message D to a related network element (for example, the second access management network element) in the second network by using the second identity information.

In a possible design, the first slice is a slice in the first network. That the first access management network element requests, based on the identifier information of the first slice, a second access management network element in the second network to access the second network includes: The first access management network element requests, based on the identifier information of the first slice, the second access management network element in the second network to access a second slice in the second network. The second slice is associated with the first slice. In this way, the first access management network element accesses the second slice on behalf of the terminal device, so that the terminal device can use a service provided by the second slice.

In a possible design, the identifier information of the first slice is included in a first message, and the first message is for requesting to register with the first network.

In a possible design, the first message includes first requested (requested) network slice selection assistance information (network slice selection assistance information, NSSAI). The first requested NSSAI includes single network slice selection assistance information (single network slice selection assistance information, S-NSSAI) of the first slice.

In a possible design, that the first access management network element requests, based on the identifier information of the first slice, a second access management network element in the second network to access the second network includes: The first access management network element sends a second message to the second access management network element in the second network based on the identifier information of the first slice, where the second message is for requesting to register with the second network.

In a possible design, the method further includes: The first access management network element receives a third message sent by the second access management network element, where the third message indicates that registration succeeds. The first access management network element sends a fourth message to the terminal device based on the third message, where the fourth message indicates that the terminal device is allowed to have permission to access the first slice.

In a possible design, that the fourth message is for allowing the terminal device to have permission to access the first slice includes: The fourth message includes the identifier information of the first slice.

In a possible design, that the fourth message is for allowing the terminal device to have permission to access the first slice includes: The fourth message includes first allowed (allowed) NSSAI. The first allowed NSSAI includes S-NSSAI of the first slice.

In a possible design, the method further includes: The first access management network element receives a fifth message sent by the second access management network element, where the fifth message indicates that the terminal device is not allowed to use a service in the second network. The first access management network element sends a sixth message to the terminal device based on the fifth message, where the sixth message indicates that the terminal device is not allowed to access the first slice.

In a possible design, that the sixth message indicates that the terminal device is not allowed to access the first slice may be implemented as follows: The sixth message includes the identifier information of the first slice.

In a possible design, that the sixth message indicates that the terminal device is not allowed to access the first slice may be implemented as follows: The sixth message includes first rejected (rejected) NSSAI. The first rejected NSSAI includes S-NSSAI of the first slice.

In a possible design, the identifier information of the first slice is included in the first message, and the first message is for requesting to establish a first protocol data unit (protocol data unit, PDU) session associated with the first slice.

In a possible design, that the first access management network element requests, based on the identifier information of the first slice, a second access management network element in the second network to access the second network includes: The first access management network element sends a second message to the second access management network element in the second network based on the identifier information of the first slice, where the second message is for requesting to establish a second PDU session related to the first slice.

In a possible design, the first message includes an identifier of the first PDU session, and the second message includes an identifier of the second PDU session.

In a possible design, the method further includes: The first access management network element receives a seventh message sent by the second access management network element, where the seventh message indicates that the second PDU session is successfully established. The first access management network element sends a ninth message to the terminal device based on the seventh message, where the ninth message indicates that the first PDU session is successfully established.

In a possible design, the method further includes: The first access management network element obtains an IP address of the second PDU session from the second access management network element. The first access management network element sends the IP address of the second PDU session to a first user plane network element in the first network. In this way, the first user plane network element may learn the IP address of the second PDU session, so that data forwarding between the first PDU session and the second PDU session can be implemented.

In a possible design, the method further includes: The first access management network element receives a tenth message sent by the second access management network element, where the tenth message indicates that the second PDU session fails to be established. The first access management network element sends an eleventh message to the terminal device based on the tenth message, where the eleventh message indicates that the first PDU session fails to be established.

In a possible design, the method further includes: The first access management network element determines to enable the permission for the terminal device to access the first slice. The first access management network element sends a twelfth message to the terminal device, where the twelfth message indicates to enable the permission for the terminal device to access the first slice. Based on this design, management and control over the permission for the terminal device to access the second network via the first network are indirectly implemented.

In a possible design, that the twelfth message indicates to enable the permission for the first slice includes: The twelfth message includes the identifier information of the first slice.

In a possible design, that the twelfth message indicates to enable the permission for the first slice includes: The twelfth message includes second allowed NSSAI. The second allowed NSSAI includes S-NSSAI of the first slice.

In a possible design, the method further includes: The first access management network element determines to disable the permission for the terminal device to access the first slice. The first access management network element sends a thirteenth message to the terminal device, where the thirteenth message indicates to disable the permission for the terminal device to access the first slice. Based on this design, management and control over the permission for the terminal device to access the second network via the first network are indirectly implemented.

In a possible design, that the thirteenth message indicates to disable the access permission to the first slice includes: The thirteenth message includes the identifier information of the first slice.

In a possible design, that the thirteenth message indicates to disable the access permission to the first slice includes: The thirteenth message includes second rejected NSSAI. The second rejected NSSAI includes NSSAI of the first slice.

In a possible design, the first network is a public network, and the second network is a non-public network. Alternatively, the first network is a non-public network, and the second network is a public network.

According to a second aspect, a network interworking method is provided. The method includes: An N3IWF obtains a routing rule in a process in which a second network establishes a second PDU session for a terminal device, where the routing rule is for forwarding a data packet of the second PDU session. The N3IWF forwards the data packet of the second PDU session based on the routing rule.

Based on the foregoing technical solution, the N3IWF may forward the data packet of the second PDU session by obtaining the routing rule of the second PDU session, to ensure normal communication between a first network and the second network.

In a possible design, the routing rule indicates to forward an uplink data packet whose source address is an IP address of the second PDU session to a second user plane network element serving the second PDU session.

In a possible design, that the N3IWF forwards the data packet of the second PDU session based on the routing rule includes: The N3IWF receives an uplink data packet of the second PDU session from a first user plane network element or a first access management network element in a first network. The N3IWF sends, based on the routing rule, the uplink data packet of the second PDU session to the second user plane network element serving the second PDU session.

In a possible design, the routing rule alternatively indicates to forward a downlink data packet whose destination address is the IP address of the second PDU session to the first access management network element or the first user plane network element in the first network.

In a possible design, that the N3IWF forwards the data packet of the second PDU session based on the routing rule includes: The N3IWF receives a downlink data packet of the second PDU session from the second user plane network element serving the second PDU session. The N3IWF sends the uplink data packet of the second PDU session to the first user plane network element or the first access management network element in the first network based on the routing rule.

According to a third aspect, a communication apparatus is provided. The communication apparatus is deployed in a first network, and includes a communication module and a processing module. The communication module is configured to receive identifier information that is of a first slice and that is sent by a terminal device, where the first slice is a slice related to a service in a second network. The processing module is configured to control, based on the identifier information of the first slice, the communication module to request a second access management network element in the second network to access the second network.

In a possible design, the processing module is further configured to obtain first identity information. The communication module is further configured to send second identity information to the second access management network element. The first identity information is for identifying the terminal device in the first network, and the first identity information is different from the second identity information.

In a possible design, the first identity information is an IMSI, an SUPI, an SUCI, or a GUTI. The second identity information is an IMSI, an SUPI, an SUCI, or a GUTI.

In a possible design, the processing module is further configured to establish an association relationship between the first identity information and the second identity information.

In a possible design, the first slice is a slice in the first network. The processing module is specifically configured to control, based on the identifier information of the first slice, the communication module to request the second access management network element in the second network to access a second slice in the second network. The second slice is associated with the first slice.

In a possible design, the identifier information of the first slice is included in a first message, and the first message is for requesting to register with the first network.

In a possible design, the first message includes first requested NSSAI. The first requested NSSAI includes S-NSSAI of the first slice.

In a possible design, the processing module is specifically configured to control, based on the identifier information of the first slice, the communication module to send a second message to the second access management network element in the second network. The second message is for requesting to register with the second network.

In a possible design, the communication module is further configured to receive a third message sent by the second access management network element, where the third message indicates that registration succeeds; and send a fourth message to the terminal device based on the third message, where the fourth message indicates that the terminal device is allowed to have permission to access the first slice.

In a possible design, that the fourth message is for allowing the terminal device to have permission to access the first slice includes: The fourth message includes the identifier information of the first slice.

In a possible design, that the fourth message is for allowing the terminal device to have permission to access the first slice includes: The fourth message includes first allowed NSSAI. The first allowed NSSAI includes S-NSSAI of the first slice.

In a possible design, the communication module is further configured to receive a fifth message sent by the second access management network element, where the fifth message indicates that the terminal device is not allowed to use a service in the second network; and send a sixth message to the terminal device based on the fifth message, where the sixth message indicates that the terminal device is not allowed to access the first slice.

In a possible design, that the sixth message indicates that the terminal device is not allowed to access the first slice may be implemented as follows: The sixth message includes the identifier information of the first slice.

In a possible design, that the sixth message indicates that the terminal device is not allowed to access the first slice may be implemented as follows: The sixth message includes first rejected (rejected) NSSAI. The first rejected NSSAI includes S-NSSAI of the first slice.

In a possible design, the identifier information of the first slice is included in the first message, and the first message is for requesting to establish a first PDU session associated with the first slice.

In a possible design, the processing module is specifically configured to control, based on the identifier information of the first slice, the communication module to send a second message to the second access management network element in the second network, where the second message is for requesting to establish a second PDU session.

In a possible design, the first message includes an identifier of the first PDU session, and the second message includes an identifier of the second PDU session.

In a possible design, the communication module is further configured to receive a seventh message sent by the second access management network element, where the seventh message indicates that the second PDU session is successfully established; and send a ninth message to the terminal device based on the seventh message, where the ninth message indicates that the first PDU session is successfully established.

In a possible design, the communication module is further configured to obtain an IP address of the second PDU session from the second access management network element; and send the IP address of the second PDU session to a first user plane network element in the first network.

In a possible design, the communication module is further configured to receive a tenth message sent by the second access management network element, where the tenth message indicates that the second PDU session fails to be established; and send an eleventh message to the terminal device based on the tenth message, where the eleventh message indicates that the first PDU session fails to be established.

In a possible design, the processing module is further configured to determine to enable the permission for the terminal device to access the first slice. The communication module is further configured to send a twelfth message to the terminal device, where the twelfth message indicates to enable the permission for the terminal device to access the first slice.

In a possible design, that the twelfth message indicates to enable the permission for the first slice includes: The twelfth message includes the identifier information of the first slice.

In a possible design, that the twelfth message indicates to enable the permission for the first slice includes: The twelfth message includes second allowed NSSAI. The second allowed NSSAI includes S-NSSAI of the first slice.

In a possible design, the processing module is further configured to determine to disable the permission for the terminal device to access the first slice. The communication module is further configured to send a thirteenth message to the terminal device, where the thirteenth message indicates to disable the permission for the terminal device to access the first slice.

In a possible design, that the thirteenth message indicates to disable the access permission to the first slice includes: The thirteenth message includes the identifier information of the first slice.

In a possible design, that the thirteenth message indicates to disable the access permission to the first slice includes: The thirteenth message includes second rejected NSSAI. The second rejected NSSAI includes NSSAI of the first slice.

In a possible design, the first network is a public network, and the second network is a non-public network. Alternatively, the first network is a non-public network, and the second network is a public network.

According to a fourth aspect, a communication apparatus is provided. The communication apparatus includes a processing module and a communication module. The processing module is configured to obtain a routing rule in a process in which a second network establishes a second PDU session for a terminal device. The communication module is configured to forward a data packet of the second PDU session based on the routing rule.

In a possible design, the routing rule indicates to forward an uplink data packet whose source address is an IP address of the second PDU session to a second user plane network element serving the second PDU session.

In a possible design, the communication module is specifically configured to receive an uplink data packet of the second PDU session from a first user plane network element or a first access management network element in a first network; and send, based on the routing rule, the uplink data packet of the second PDU session to the second user plane network element serving the second PDU session.

In a possible design, the routing rule alternatively indicates to forward a downlink data packet whose destination address is the IP address of the second PDU session to the first access management network element or the first user plane network element in the first network.

In a possible design, the communication module is specifically configured to receive a downlink data packet of the second PDU session from the second user plane network element serving the second PDU session; and send the uplink data packet of the second PDU session to the first user plane network element or the first access management network element in the first network based on the routing rule.

According to a fifth aspect, a communication apparatus is provided, where the communication apparatus includes a processor and a memory. The memory stores computer program instructions, and when the processor executes the computer program instructions stored in the memory, the processor is configured to implement the method provided in any design of the first aspect or the second aspect.

According to a sixth aspect, a computer-readable storage medium is provided. The computer-readable storage medium stores computer instructions, and when the computer instructions are run on a computer, the computer is enabled to perform the method provided in any design of the first aspect or the second aspect.

According to a seventh aspect, a computer program product including computer instructions is provided. When the computer instructions are run on a computer, the computer is enabled to perform the method provided in any design of the first aspect or the second aspect.

According to an eighth aspect, a chip is provided, including a processing circuit and a transceiver pin. The processing circuit and the transceiver pin are configured to implement the method provided in any design of the first aspect or the second aspect. The processing circuit is configured to perform a processing action in the corresponding method, and the transceiver pin is configured to perform a receiving/sending action in the corresponding method.

According to a ninth aspect, a communication system is provided. The communication system includes a first access management network element in a first network and an N3IWF in a second network. The first access management network element is configured to perform the method provided in any design of the first aspect. The N3IWF is configured to perform the method provided in any design of the second aspect.

It should be noted that, for a technical effect brought by any design of the third aspect to the ninth aspect, refer to a technical effect brought by a corresponding design of the first aspect. Details are not described herein again.

### BRIEF DESCRIPTION OF DRAWINGS

FIG. 1A and FIG. 1B are a schematic diagram of a registration procedure according to an embodiment of this application;
FIG. 2 is a schematic diagram of an architecture of a 5G network according to an embodiment of this application;
FIG. 3 is a schematic diagram of an architecture of an SNPN;
FIG. 4 is a schematic diagram of an architecture of a PNI-NPN;
FIG. 5 is a schematic diagram of an architecture in which a public network interworks with a private network according to an embodiment of this application;
FIG. 6 is a schematic diagram of a communication system according to an embodiment of this application;
FIG. 7(a) is a schematic diagram of an architecture in which a public network interworks with a private network according to an embodiment of this application;
FIG. 7(b) is a schematic diagram of another architecture in which a public network interworks with a private network according to an embodiment of this application;
FIG. 7(c) is a schematic diagram of another architecture in which a public network interworks with a private network according to an embodiment of this application;
FIG. 7(d) a schematic diagram of another architecture in which a public network interworks with a private network according to an embodiment of this application;
FIG. 8 is a flowchart of a network interworking method according to an embodiment of this application;
FIG. 9 is a flowchart of another network interworking method according to an embodiment of this application;
FIG. 10 is a flowchart of another network interworking method according to an embodiment of this application;
FIG. 11 is a flowchart of another network interworking method according to an embodiment of this application;
FIG. 12A and FIG. 12B are a flowchart of another network interworking method according to an embodiment of this application;
FIG. 13(a) is a flowchart of another network interworking method according to an embodiment of this application;
FIG. 13(b) is a flowchart of another network interworking method according to an embodiment of this application;
FIG. 14A and FIG. 14B are a flowchart of another network interworking method according to an embodiment of this application;
FIG. 15(a) is a flowchart of another network interworking method according to an embodiment of this application;
FIG. 15(b) is a flowchart of another network interworking method according to an embodiment of this application;
FIG. 16 is a flowchart of another network interworking method according to an embodiment of this application;
FIG. 17 is a flowchart of another network interworking method according to an embodiment of this application;
FIG. 18 is a flowchart of another network interworking method according to an embodiment of this application;
FIG. 19 is a flowchart of another network interworking method according to an embodiment of this application;
FIG. 20 is a schematic diagram of a structure of a communication apparatus according to an embodiment of this application; and
FIG. 21 is a schematic diagram of a structure of another communication apparatus according to an embodiment of this application.

### DESCRIPTION OF EMBODIMENTS

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that in this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a relative concept in a specific manner.

For ease of understanding by a person skilled in the art, the following first describes some technical terms.

### 1. Network slice (network slice)

The network slice is a logically isolated network that is for supporting a specific network capability and a specific network feature, and may include an entire end to end (end to end, E2E) network. Alternatively, some network functions may be shared in a plurality of network slices. The network slice is a key technology that satisfies a network differentiation requirement of a 5th generation (5th generation, 5G) mobile communication technology proposed by the 3rd generation partnership project (3rd generation partnership project, 3GPP).

The network slice may be identified by using S-NSSAI. The S-NSSAI includes the following two parts: (1) a slice/service type (slice/service type, SST) that is for predicting behavior of a network slice in a term of a function or a service; and (2) a slice differentiator (slice differentiator, SD) that belongs to optional information, and is for distinguishing a plurality of network slices with a same SST. In this application, the network slice is also referred to as a slice.

### 2. NSSAI

The NSSAI is a set of S-NSSAI. In other words, one piece of NSSAI may include at least one piece of S-NSSAI.

Optionally, the NSSAI has the following plurality of types:
(1) requested (requested) NSSAI, including one or more S-NSSAI that a terminal device requests to access;
(2) allowed (allowed) NSSAI, including one or more S-NSSAI that are allowed by a network side to be accessed; and
(3) rejected (rejected) NSSAI, including one or more S-NSSAI that are rejected by a network side to be accessed.

### 3. Security context

The security context is information that can be for implementing security protection (for example, encryption/decryption, and/or integrity protection/check) of data. For example, the security context may include an encryption key or an integrity protection key.

The encryption key is a parameter input by a transmit end when the transmit end encrypts a plaintext according to an encryption algorithm to generate a ciphertext. If a symmetric encryption method is used, the encryption key and a decryption key are the same. A receive end may decrypt the ciphertext according to the same encryption algorithm and based on the encryption key. In other words, the transmit end and the receive end may perform encryption and decryption based on the same key.

The integrity protection key is a parameter input by a transmit end when the transmit end performs integrity protection on a plaintext or a ciphertext according to an integrity protection algorithm. A receive end may perform, according to the same integrity protection algorithm and based on the integrity protection key, integrity check on data on which integrity protection is performed.

### 4. Registration procedure

The registration procedure is for establishing a connection between a terminal device and a network side, so that the terminal device can access a network. The registration procedure may be classified into the following:
(1) Initial registration procedure: The 1^{st} registration procedure that is initiated by a terminal device due to some reasons (for example, power-on).
(2) Mobility update registration procedure: A registration procedure initiated when a terminal device moves out of an original service area.
(3) Periodicity registration procedure: A registration procedure initiated by a terminal device at a preset time interval. It should be understood that the periodicity registration procedure is similar to a heartbeat mechanism, so that a network side learns that the terminal is still in a service area.
(4) Emergency registration procedure: A registration procedure initiated by a terminal device to use an emergency service. The terminal device may be a limited terminal device, for example, a terminal device on which no SIM card is installed. For example, the emergency service may include making an emergency call.

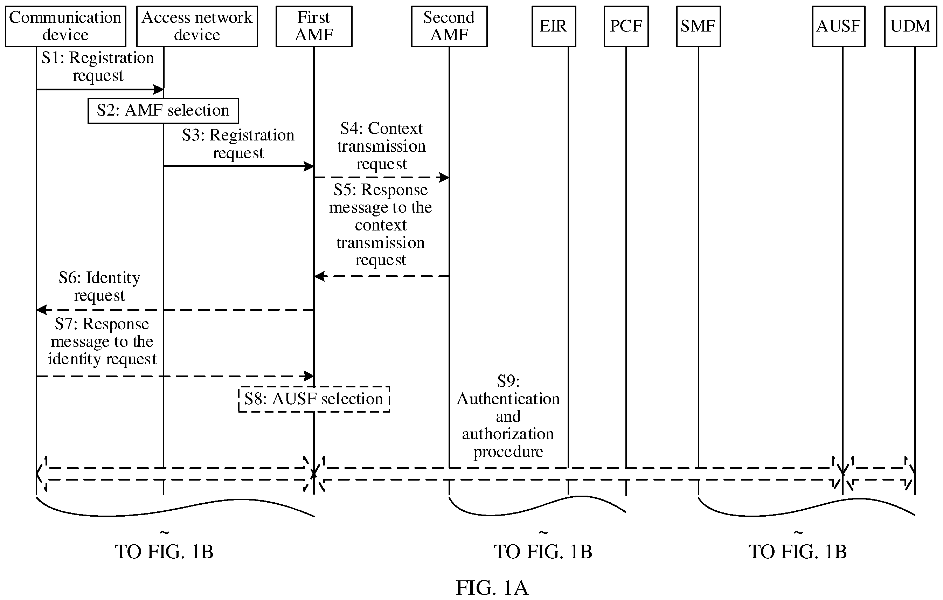

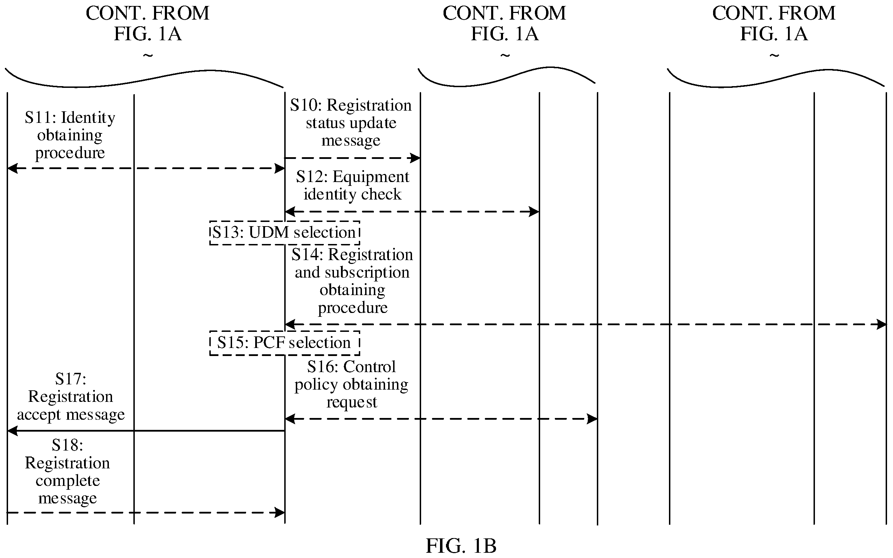

For example, as shown in FIG. 1A and FIG. 1B, the registration procedure may include the following steps.
S 1: A terminal device sends a registration request to an access network device.
S2: The access network device performs an access and mobility management function (access and mobility management function, AMF) selection procedure.
S3: The access network device sends a registration request to a first AMF.
S4: The first AMF determines a second AMF based on the registration request, and sends a context transmission request to the second AMF.
   The first AMF is an AMF that currently serves the terminal device. The second AMF is an AMF that previously serves the terminal device.
S5: The second AMF sends, to the first AMF, a response message to the context transmission request.
S6: The first AMF sends an identity request (for example, an Identity Request message) to the terminal device.
S7: The terminal device sends, to the first AMF, a response message (for example, an Identity Response message) to the identity request.
S8: The first AMF performs an authentication server function (authentication server function, AUSF) selection procedure.
   If the first AMF cannot find a security context locally or in the second AMF, or the first AMF fails to perform integrity check on the information sent by the terminal device, the first AMF needs to perform the following step S9.
S9: Perform an authentication and authorization procedure between the terminal device and a network side.
S10: The first AMF sends a registration status update message (for example, an Namf_Communication RegistrationStatusUpdate message) to the second AMF.
S11: The first AMF initiates an identity obtaining procedure to the UE.
S12: The first AMF and an equipment identity register (equipment identity register, EIR) perform equipment identity check.
S13: The first AMF performs a unified data management (unified data management, UDM) selection procedure.
S14: The first AMF and a UDM perform an AMF registration and UE subscription obtaining procedure.
S15: If the first AMF determines that policy control function (policy control function, PCF) information provided by the second AMF is unavailable, the first AMF performs a PCF selection procedure.
S 16: If the first AMF determines that the PCF information provided by the second AMF is available, and a PCF indicated by the PCF information is a PCF used by the second AMF, the first AMF sends a control policy obtaining request to the PCF.
S17: The first AMF sends a registration accept message (for example, a Registration Accept message) to the terminal device.
The registration accept message indicates the network side to accept registration of the terminal device.
S18: The terminal device sends a registration complete message (for example, a Registration complete message) to the first AMF.

It may be understood that the registration complete message indicates that the registration procedure is completed.

The foregoing steps S4 to S16 and S18 are optional steps, and may be performed or not performed based on an actual situation.

The steps in the registration procedure are described above. The registration procedure may alternatively include another step. Embodiments of this application are not limited thereto.

### 5. Protocol data unit (protocol data unit, PDU) session

A 5G core network supports a PDU connection service. The PDU connection service is a service of exchanging a PDU data packet between a terminal device and a data network (data network, DN). The PDU connection service is implemented by initiating establishment of a PDU session by the terminal device. The terminal device establishes the PDU session, that is, establishes a data transmission channel between the terminal device and the DN.

It should be noted that the terminal device may initiate establishment of one or more PDU sessions to connect to a same DN or different DNs. The terminal device may be served by a group of core network elements (such as a session management function (session management function, SMF) network element, a policy control function (policy control function, PCF) network element, and a user plane function (user plane function, UPF) network element). These core network elements coordinate and manage a PDU session resource of the terminal device.

### 6. 5G system architecture

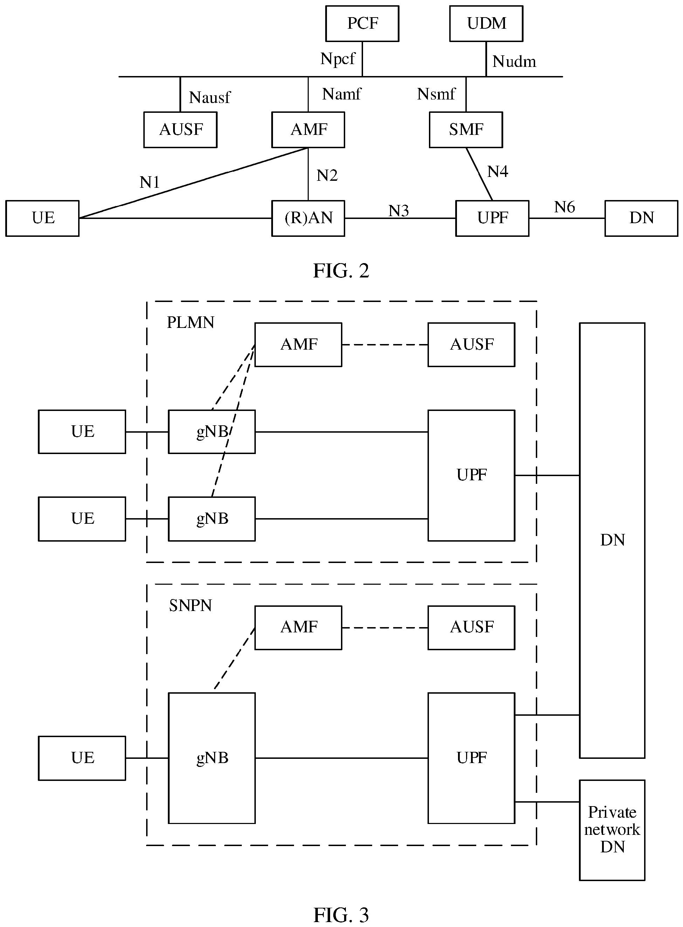

As shown in FIG. 2, a 5G network may include a terminal device, a radio access network (radio access network, RAN) or an access network (access network, AN) (where the RAN and the AN are collectively referred to as a (R)AN below), a core network (core network, CN), and a data network (data network, DN).

The terminal device may be a device with a wireless transceiver function. The terminal device may have different names, for example, user equipment (user equipment, UE), an access terminal, a terminal unit, a terminal station, a mobile station, a mobile console, a remote station, a remote terminal, a mobile device, a wireless communication device, a terminal agent, or a terminal apparatus. The terminal may be deployed on land, including an indoor or outdoor device, a handheld device, or a vehicle-mounted device, or may be deployed on a water surface (for example, on a ship), or may be deployed in air (for example, on aircraft, a balloon, or a satellite). The terminal device includes a handheld device, a vehicle-mounted device, a wearable device, or a computing device that has a wireless communication function. For example, the terminal device may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like.

The access network device is a device that provides a wireless communication function for the terminal device. The access network device may also be referred to as a base station. There may be various forms of base stations, for example, a macro base station, a micro base station (which is also referred to as a small cell), a relay station, and an access point. The base station may be specifically an access point (access point, AP) in a wireless local area network (wireless local area network, WLAN), a base transceiver station (Base Transceiver Station, BTS) in a global system for mobile communications (global system for mobile Communications, GSM) or code division multiple access (code division multiple access, CDMA), a NodeB (NodeB, NB) in wideband code division multiple access (wideband code division multiple access, WCDMA), an evolved NodeB (evolved NodeB, eNB or eNodeB) in long term evolution (long term evolution, LTE), a relay station or an access point, a vehicle-mounted device, a wearable device, a next generation NodeB (next generation NodeB, gNB) in a future 5G network, a base station in a further evolved public land mobile network (Public Land Mobile Network, PLMN), or the like.

The core network includes a plurality of core network elements (which are alternatively referred to as network function network elements), for example, an access and mobility management function (access and mobility management function, AMF) network element, a session management function (session management function, SMF) network element, a policy control function (policy control function, PCF) network element, a user plane function (user plane function, UPF) network element, an AUSF network element, and a UDM network element. In addition, the core network may further include some other network elements that are not shown. Details are not described in embodiments of this application.

In addition, the core network may further include some network elements that are not shown in FIG. 2, for example, a security anchor function (security anchor function, SEAF) network element. Details are not described in embodiments of this application.

In a future communication system such as a 6G communication system, the network element or the device may still use a name of the network element or the device in the 5G communication system, or have another name. A function of the network element or the device may be completed by one independent network element, or may be jointly completed by several network elements. This is not limited in embodiments of this application.

During actual deployment, network elements in the core network may be co-deployed. For example, the access and mobility management function may be integrated with the session management function, and the session management function may be integrated with the user plane function. When two network elements are co-deployed, interaction between the two network elements provided in embodiments of this application becomes an internal operation of the co-deployed network elements or may be omitted.

The foregoing describes the technical terms in this application. Details are not described below again.

A public land mobile network (public land mobile network, PLMN) is a public network established and operated for the public to provide a land mobile communication service. With the development of a network service, in consideration of service security, some enterprises or individuals further have a requirement for establishing an own non-public network (non-public network, NPN).

Based on different deployment modes, the NPN may be currently classified into two types: a stand-alone NPN (stand-alone NPN, SNPN) and a PLMN-integrated NPN (PLMN-integrated NPN, PNI-NPN).

As shown in FIG. 3, an SNPN includes an independent access network device and an independent core network, and does not depend on a PLMN established by a network operator to provide a function. For example, as shown in FIG. 3, the SNPN may include an independent AMF, AUSF, UPF, and gNB.

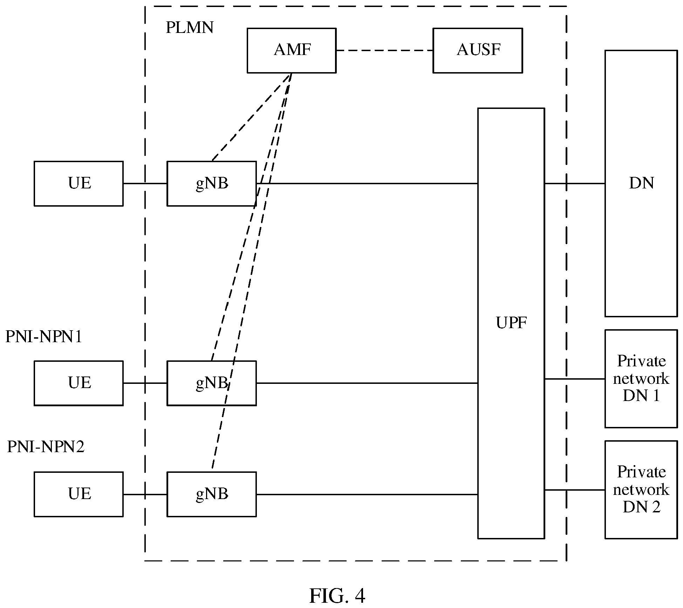

As shown in FIG. 4, a PNI-NPN is an NPN deployed with support of a PLMN. The PNI-NPN may be completely or partially hosted on an infrastructure of the PLMN, and depend on the PLMN to provide some network functions. For example, as shown in FIG. 4, for a PNI-NPN 1, UE needs to use a gNB and a UPF in a PLMN to access a private network DN 1. For a PNI-NPN 2, UE can access a private network DN 2 only by using a gNB and the UPF in the PLMN.

It should be understood that the NPN is a private network built by an enterprise, and the NPN may be isolated from a public network (namely, the PLMN). However, in some cases, the enterprise still have a requirement for interworking between the NPN and the PLMN. For example, when an employee of the enterprise needs to work at home, the employee needs to access the NPN via the PLMN. For another example, if a device of the enterprise is faulty at night, an employee needs to notify an administrator by using enterprise communication software, that is, the device of the enterprise needs to access the PLMN via the NPN. For another example, the enterprise establishes an SNPN in a campus in Beijing. Then, with the expansion of a scale, the enterprise establishes a branch in Shanghai and establishes another SNPN in a campus in Shanghai. The two SNPNs need to be interconnected via the PLMN.

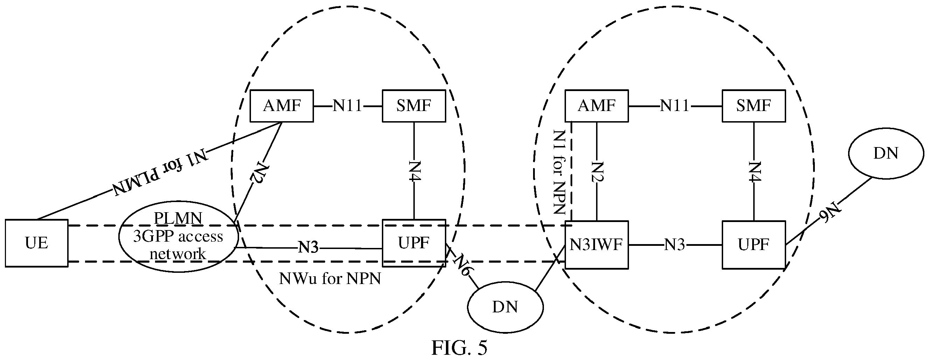

For example, the NPN is an SNPN. FIG. 5 shows an architecture in which a public network interworks with a private network. As shown in FIG. 5, a core network of a PLMN includes an AMF, an SMF, and a UPF. A core network of an SNPN includes an AMF, an SMF, a UPF, and an N3IWF. Correspondingly, a corresponding N3IWF (which is not shown in FIG. 5) may alternatively be disposed in the core network of the PLMN, to ensure security of a connection between UE and the PLMN.

Based on the architecture shown in FIG. 5, a terminal device may access the core network of the SNPN via an access network and the core network of the PLMN. However, on one hand, because a message between the terminal device and the SNPN is transparently transmitted in the PLMN, the PLMN cannot learn whether the terminal device accesses the SNPN, and cannot control the terminal device to access the SNPN. In addition, to ensure security, the N3IWF needs to establish a security tunnel to the terminal device. The security tunnel is generally implemented based on a complex IPsec protocol stack. Consequently, the terminal device needs to support an IPsec protocol stack. As a result, a protocol stack of the terminal device becomes complex, and manufacturing costs of the terminal device are increased.

Therefore, in an architecture in which a first network interworks with a second network, how to enhance control of the first network over access of a terminal device to the second network is an urgent technical problem to be resolved.

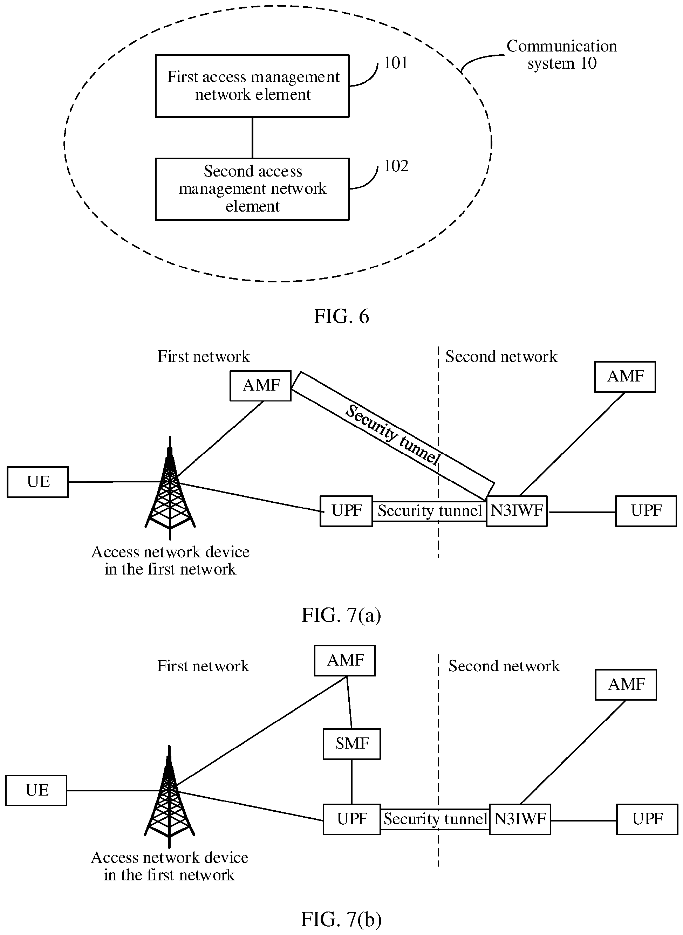

In this case, as shown in FIG. 6, an embodiment of this application provides a communication system 10. The communication system 10 includes a first access management network element 101 and a second access management network element 102. It should be understood that the first access management network element 101 and the second access management network element 102 may directly communicate with each other, or may communicate with each other through forwarding by another device. This is not limited herein.

The first access management network element 101 belongs to a first network, and the second access management network element belongs to a second network. The first network and the second network are two different networks. The first network may be a public network or a non-public network, and the second network may be a public network or a non-public network. For example, the first network is a public network, and the second network is a non-public network. Alternatively, the first network is a non-public network, and the second network is a public network. The first network and the second network may use a same communication standard or different communication standards. For example, the first network uses a 5G communication standard, and the second network also uses the 5G communication standard.

The first access management network element 101 is configured to receive identifier information that is of a first slice and that is sent by a terminal device, where the first slice is a slice related to a service in the second network; and requests, based on the identifier information of the first slice, the second access management network element in the second network to access the second network.

For detailed descriptions of operations performed by the first access management network element 101 and the second access management network element 102, refer to a corresponding method embodiment below. Details are not described herein.

It should be understood that because the first slice is the slice related to the service in the second network, the first access management network element may learn, based on the identifier information of the first slice, that the terminal device wants to access the second network. Therefore, the first access management network element in the first network requests the second access management network element in the second network to access the second network. It can be learned that the first access management network element in the first network may learn that the terminal device wants to access the second network, and may further control the terminal device to access the second network. According to the technical solution provided in this application, control of the first network over access of the terminal device to the second network can be enhanced.

In addition, the first access management network element requests to access the second network on behalf of the terminal device, and the terminal device does not directly exchange information with the second network. Therefore, the terminal device does not need to establish an IPsec tunnel with a security gateway (for example, an N3IWF), and the terminal device does not need to support an IPsec protocol stack, so that manufacturing costs of the terminal device are reduced.

For example, the communication system 10 shown in FIG. 6 is applicable to the following architectures in which the first network interworks with the second network and that are shown in FIG. 7(a) to FIG. 7(d). The first access management network element 101 in the communication system 10 may be implemented as an AMF in the first network, and the second access management network element may be implemented as an AMF in the second network.

### Architecture 1

FIG. 7(a) shows an architecture in which a first network interworks with a second network. As shown in FIG. 7(a), the first network may include an AMF and a UPF, and the second network includes an AMF, an N3IWF, and a UPF. A security tunnel is established between the AMF in the first network and the N3IWF in the second network, and a security tunnel is established between the UPF in the first network and the N3IWF in the second network.

It should be understood that because the N3IWF separately establishes the tunnels with the AMF and the UPF in the first network, the N3IWF forwards a message from the second network based on whether the message is a data plane message or a control plane message. For the control plane message, the N3IWF sends the control plane message to the AMF in the first network through the tunnel for communication with the AMF in the first network. For the data plane message, the N3IWF sends the data plane message to the UPF in the first network through the tunnel for communication with the UPF in the first network.

Based on the architecture shown in FIG. 7(a), information between the AMF in the first network and the AMF in the second network may be forwarded via the N3IWF.

For example, based on the architecture shown in FIG. 7(a), a transmission path of a message (for example, a second message below) sent by the AMF in the first network to the AMF in the second network may be: the AMF in the first network -> the N3IWF -> the AMF in the second network. -> indicates a transmission direction. For example, the AMF in the first network -> the N3IWF indicates that the AMF in the first network sends the message to the N3IWF. This is uniformly described herein, and details are not described again below.

For another example, based on the architecture shown in FIG. 7(a), a transmission path of a message (for example, a third message, a fifth message, a seventh message, or a tenth message below) sent by the AMF in the second network to the AMF in the first network may be: the AMF in the second network -> the N3IWF -> the AMF in the first network.

Based on the architecture shown in FIG. 7(a), user plane data of UE may be transmitted by using an access network device in the first network, the UPF in the first network, the N3IWF, and the UPF in the second network.

For example, based on the architecture shown in FIG. 7(a), a transmission path of downlink user plane data of the UE may be: the UPF in the second network -> the N3IWF -> the UPF in the first network -> the access network device in the first network -> the UE.

For example, based on the architecture shown in FIG. 7(a), a transmission path of uplink user plane data of the UE may be: the UE -> the access network device in the first network -> the UPF in the first network -> the N3IWF -> the UPF in the second network.

### Architecture 2

FIG. 7(b) is a schematic diagram of another architecture in which a first network interworks with a second network. As shown in FIG. 7(b), a core network of the first network may include an AMF and a UPF, and a core network of the second network includes an AMF, an N3IWF, and a UPF. No security tunnel is established between the AMF in the first network and the N3IWF in the second network, and a security tunnel is established between the UPF in the first network and the N3IWF in the second network.

It should be understood that the N3IWF establishes the tunnel with the UPF in the first network, but establishes no tunnel with the AMF in the first network. Therefore, for a message from the second network, regardless of whether the message is a data plane message or a control plane message, the N3IWF forwards the message to the UPF in the first network through the tunnel for communication with the UPF in the first network.

Based on the architecture shown in FIG. 7(b), information between the AMF in the first network and the AMF in the second network may be forwarded via the N3IWF and some other network elements.

For example, based on the architecture shown in FIG. 7(b), a transmission path of a message (for example, the second message below) sent by the AMF in the first network to the AMF in the second network may be: the AMF in the first network -> an SMF in the first network -> the UPF in the first network -> the N3IWF -> the AMF in the second network.

For another example, based on the architecture shown in FIG. 7(b), a transmission path of a message (for example, the third message, the fifth message, the seventh message, or the tenth message below) sent by the AMF in the second network to the AMF in the first network may be: the AMF in the second network -> the N3IWF -> the UPF in the first network -> the SMF in the first network -> the AMF in the first network.

Based on the architecture shown in FIG. 7(b), user plane data of UE may be transmitted by using an access network device in the first network, the UPF in the first network, the N3IWF, and the UPF in the second network.

For example, based on the architecture shown in FIG. 7(b), a transmission path of downlink user plane data of the UE may be: the UPF in the second network -> the N3IWF -> the UPF in the first network -> the access network device in the first network -> the UE.

For example, based on the architecture shown in FIG. 7(b), a transmission path of uplink user plane data of the UE may be: the UE -> the access network device in the first network -> the UPF in the first network -> the N3IWF -> the UPF in the second network.

### Architecture 3

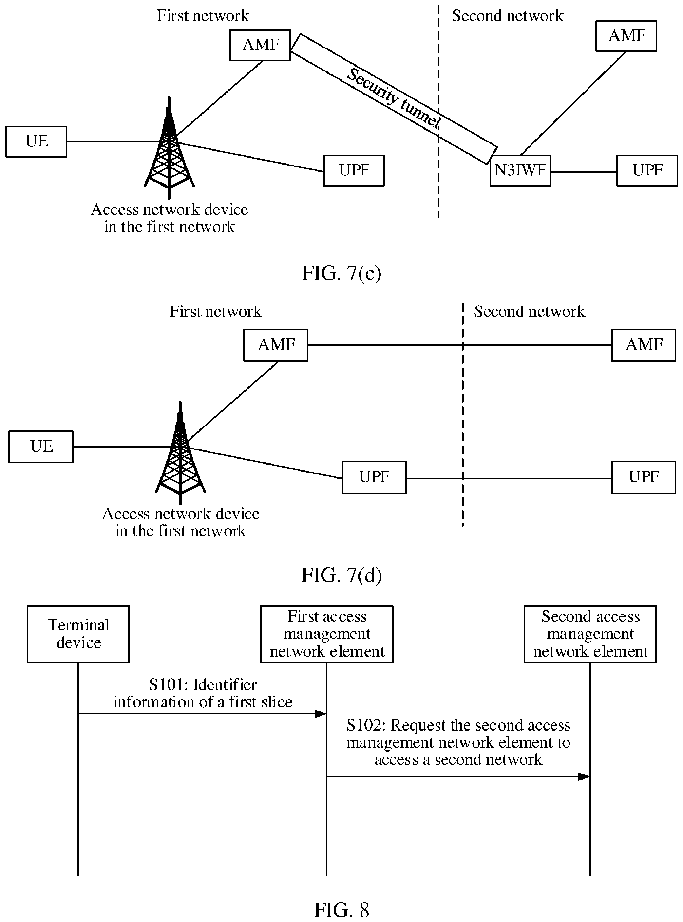

FIG. 7(c) is a schematic diagram of another architecture in which a first network interworks with a second network. As shown in FIG. 7(c), a core network of the first network may include an AMF and a UPF, and a core network of the second network includes an AMF, an N3IWF, and a UPF. A security tunnel is established between the AMF in the first network and the N3IWF in the second network, and no security tunnel is established between the UPF in the first network and the N3IWF in the second network.

It should be understood that the N3IWF establishes the tunnel with the AMF in the first network, but establishes no tunnel with the UPF in the first network. Therefore, for a message from the second network, regardless of whether the message is a data plane message or a control plane message, the N3IWF forwards the message to the AMF in the first network through the tunnel for communication with the AMF in the first network.

Based on the architecture shown in FIG. 7(c), information between the AMF in the first network and the AMF in the second network may be forwarded via the N3IWF.

For example, based on the architecture shown in FIG. 7(c), a transmission path of a message (for example, the second message below) sent by the AMF in the first network to the AMF in the second network may be: the AMF in the first network -> the N3IWF -> the AMF in the second network.

For another example, based on the architecture shown in FIG. 7(c), a transmission path of a message (for example, the third message, the fifth message, the seventh message, or the tenth message below) sent by the AMF in the second network to the AMF in the first network may be: the AMF in the second network -> the N3IWF -> the AMF in the first network.

Based on the architecture shown in FIG. 7(c), user plane data of UE may be transmitted by using an access network device in the first network, the AMF in the first network, the N3IWF, and the AMF in the second network.

For example, based on the architecture shown in FIG. 7(c), a transmission path of downlink user plane data of the UE may be: the AMF in the second network -> the N3IWF -> the AMF in the first network -> the access network device in the first network -> the UE.

For example, based on the architecture shown in FIG. 7(c), a transmission path of uplink user plane data of the UE may be: the UE -> the access network device in the first network -> the AMF in the first network -> the N3IWF -> the AMF in the second network.

Optionally, the architecture shown in FIG. 7(c) supports only transmission that is of messages of some types (for example, small-packet data) in a data plane message of the UE and that is between two networks.

### Architecture 4

FIG. 7(d) is a schematic diagram of another architecture of a first network and a second network. As shown in FIG. 7(d), an AMF in the first network is directly connected to an AMF in the second network, and a UPF in the first network is directly connected to a UPF in the second network.

Based on the architecture shown in FIG. 7(d), the AMF in the first network may directly communicate with the AMF in the second network. The UPF in the first network may directly communicate with the UPF in the second network.

In the architectures shown in FIG. 7(a) to FIG. 7(d), both the first network and the second network include a network element that is not marked, for example, the SMF or an AUSF. This is not limited herein.

In the architectures shown in FIG. 7(a) to FIG. 7(c), the N3IWF may be replaced with another device. This is not limited herein. For example, in the architectures shown in FIG. 7(a) to FIG. 7(c), the N3IWF may be replaced with an access network device, and the access network device may establish a connection to the AMF and/or the UPF in the first network.

The following describes embodiments of this application with reference to the accompanying drawings of this specification. It should be understood that names of various messages, information, and parameters mentioned in the following embodiments are merely examples, and do not constitute a specific limitation. The messages, the information, and the parameters may have different names in different application scenarios.

The following describes in detail a network interworking method provided in an embodiment of this application. As shown in FIG. 8, the method includes the following steps.

S101: A terminal device sends identifier information of a first slice to a first access management network element. Correspondingly, the first access management network element receives the identifier information that is of the first slice and that is sent by the terminal device.

The first access management network element belongs to a first network. The first access management network element is configured to be responsible for access management of the first network. For example, the first access management network element may be a mobility management entity (mobility management entity, MME) in a 4G network, an AMF in a 5G network, or a device that takes on a function such as access management in a future network.

The first slice is a slice in the first network. The first slice is a slice related to a service in a second network. In other words, the first slice is associated with all or a part of services in the second network.

The identifier information of the first slice indicates that the terminal device requests to access the first slice. Alternatively, the identifier information of the first slice indicates that the terminal device requests to access the second network. Alternatively, the identifier information of the first slice indicates that the terminal device requests to use the service in the second network.

In a possible implementation, step S101 may be specifically implemented as: The terminal device sends a first message to the first access management network element, where the first message includes the identifier information of the first slice. For example, the identifier information of the first slice may be S-NSSAI of the first slice. This is not limited herein.

Optionally, the first access management network element obtains an identifier of the first network. For example, the first message that is sent by the terminal device and received by the first access management network element may further include the identifier of the first network. The identifier of the first network indicates that the first message is for a related procedure (for example, a registration procedure or a PDU session establishment procedure) in the first network.

Optionally, the first access management network element obtains first identity information. For example, the first message includes the first identity information, and the first identity information is for identifying the terminal device in the first network. Therefore, the first access management network element may learn, based on the first identity information, the terminal device that sends the first message. For example, a form of the first identity information may be an IMSI, an SUPI, an SUCI, or a GUTI. This is not limited herein.

In this embodiment of this application, the identity information may alternatively have another name, for example, terminal identity information, device identity information, or user information. This is not limited herein.

In this embodiment of this application, the first message may be a non-access stratum (non-access stratum, NAS) message. For example, the first message may be a registration request message, a PDU session establishment request message, or a service request message.

S102: The first access management network element requests, based on the identifier information of the first slice, a second access management network element to access the second network. Correspondingly, the second access management network element receives a request that is for accessing the second network and that is sent by the first access management network element.

The second access management network element belongs to the second network. The second access management network element is configured to be responsible for access management of the second network. For example, the second access management network element may be an MME in a 4G network, an AMF in a 5G network, or a device that takes on a function such as access management in a future network.

In this embodiment of this application, accessing the second network may be registering with the second network, establishing a PDU session in the second network, or the like. This is not specifically limited herein.

Optionally, step S102 may be specifically implemented as: The first access management network element sends a second message to the second access management network element based on the identifier information of the first slice, where the second message is for requesting to access the second network.

Optionally, the second message may be a NAS message. For example, the second message may be a registration request message, a PDU session establishment request message, or a service request message.

In a possible design, the first access management network element requests, based on the identifier information of the first slice, the second access management network element to access a second slice in the second network. The first slice is associated with the second slice.

Optionally, the first access management network element may further obtain, from another network element (for example, a unified data management network element), an association relationship between the identifier information of the first slice and identifier information of one or more second slices. Alternatively, the association relationship may be configured on the first access management network element. The second slice is a slice in the second network. One second slice is associated with one service in the second network.

Optionally, the identifier information of the second slice may be carried in the second message.

Optionally, the first access management network element obtains identifier information of the second network, and sends the identifier information of the second network to the second access management network element. For example, the first access management network element may obtain, from another network element (for example, a unified data management network element), an association relationship between the identifier information of the first slice and the identifier information of the second network. Alternatively, the association relationship may be configured on the first access management network element. Therefore, after receiving the identifier information of the first slice, the first access management network element can determine a network (namely, the second network) associated with the first slice.

For example, the second network is a PLMN. The identifier information of the second network may be a PLMN ID. Alternatively, for example, the second network is an SNPN. The identifier information of the second network may be an SNPN ID.

Optionally, the identifier information of the second network may be carried in the second message, to indicate that the second message is for a related procedure (for example, a registration procedure or a PDU session establishment procedure) in the second network.

Optionally, the first access management network element may further obtain second identity information, and send the second identity information to the second access management network element. The second identity information is for identifying the terminal device in the second network. The second identity information is different from the first identity information. For example, assuming that the first message includes an SUCI #1, the second message may include an SUCI #2, where the SUCI #1 is different from the SUCI #2.

For example, a form of the second identity information may be an IMSI, an SUPI, an SUCI, or a GUTI. This is not limited herein.

Optionally, the second identity information may be carried in the second message. It should be understood that because the first identity information is for identifying the terminal device in the first network, a network element in the second network may not be capable of identifying the first identity information. Therefore, the second message includes the second identity information that can be identified by the second network, so that the first access management network element can normally communicate with a related network element (for example, the second access management network element) in the second network on behalf of the terminal device.

Optionally, the first access management network element may establish and store an association relationship between the first identity information and the second identity information, so that the first access management network element can achieve an objective of communicating with the second network on behalf of the terminal device.

For example, based on the association relationship between the first identity information and the second identity information, after receiving, from a related network element (for example, the second access management network element) in the second network, a message A related to the second identity information, the first access management network element may parse the message A to obtain content carried in the message A, encapsulate all or a part of the content carried in the message A into a message B, and send the message B to the terminal device.

For another example, based on the association relationship between the first identity information and the second identity information, after receiving a message C that is related to the first slice and that is sent by the terminal device, the first access management network element may parse the message C to obtain content carried in the message C, encapsulate all or a part of the content carried in the message C into a message D, and send the message D to a related network element (for example, the second access management network element) in the second network.

The following describes an implementation in which the first access management network element obtains the second identity information.

Implementation 1-1: The first access management network element obtains the second identity information from the terminal device.

Implementation 1-2: The first access management network element obtains third identity information from the terminal device, and then generates the second identity information based on the third identity information.

It should be understood that the third identity information is for deriving the second identity information.

In a possible design, the third identity information is identity information obtained by decrypting the second identity information. Correspondingly, the second identity information is identity information obtained by encrypting the third identity information.

For example, the third identity information is an SUPI, and the second identity information is an SUCI. The SUCI is obtained by encrypting the SUPI.

Implementation 1-3: The first access management network element locally obtains the second identity information.

In a possible implementation, the first access management network element pre-establishes a first correspondence, and the first correspondence includes a correspondence between the identifier information of the first slice and the second identity information. Therefore, the first access management network element may find the second identity information based on the first correspondence and the identifier information of the first slice. It should be understood that the first correspondence may be a one-to-one correspondence or a one-to-many correspondence. This is not limited herein.

In another possible implementation, the first access management network element pre-establishes a second correspondence, and the second correspondence includes a correspondence between the first identity information and the second identity information. Therefore, the first access management network element may find the corresponding second identity information based on the second correspondence and the first identity information that is obtained from the terminal device.

In still another possible implementation, the first access management network element pre-stores a plurality of pieces of identity information that are for the second network. Then, when receiving the identifier information of the first slice, the first access management network element may select, from the plurality of pieces of pre-stored identity information that are for the second network, one piece of identity information as the second identity information based on a specific rule or in a random manner.

Implementation 1-4: The first access management network element locally obtains third identity information, and then generates the second identity information based on the third identity information.

In a possible implementation, the first access management network element may pre-establish a third correspondence, and the third correspondence may be a correspondence between the identifier information of the first slice and the third identity information. Therefore, the first access management network element may find the third identity information based on the third correspondence and the identifier information of the first slice. It should be understood that the third correspondence may be a one-to-one correspondence or a one-to-many correspondence. This is not limited herein.

In another possible implementation, the first access management network element may pre-establish a fourth correspondence, and the fourth correspondence may be a correspondence between fourth identity information and the third identity information. The fourth identity information is for deriving the first identity information. Therefore, the first access management network element finds the corresponding third identity information based on the fourth correspondence and the first identity information.

For example, it is assumed that the first identity information is an SUCI #1, the second identity information is an SUCI #2, the third identity information is an SUPI #2, and the fourth identity information is an SUPI #1. The SUPI #1 may be for generating the SUCI #1, and the SUPI #2 may generate the SUCI #2. The first access management network element determines, based on the received SUCI #1, the SUPI #1 corresponding to the SUCI #1. Then, the first access management network element determines the SUPI #2 based on the SUPI #1 and a correspondence between the SUPI #1 and the SUPI #2. The first access management network element may determine the SUCI #2 based on the SUPI #2.

In still another possible implementation, the first access management network element pre-stores a plurality of pieces of identity information that are for the second network. Then, when receiving the identifier information of the first slice, the first access management network element may select, from the plurality of pieces of pre-stored identity information that are for the second network, one piece of identity information as the third identity information based on a specific rule or in a random manner.

Implementations 1-5: The first access management network element obtains the second identity information from another network element (for example, a first data management network element) in the first network.

For example, the first access management network element sends a first request message to the first data management network element. Then, the first access management network element receives a first response message sent by the first data management network element, where the first response message includes the second identity information.

Optionally, the first request message may include the first identity information or the identifier information of the first slice.

For example, the first request message may be an Nudm_SDM_GET Request, and the first response message may be an Nudm_SDM_GET Response. This is not limited herein.

Implementations 1-6: The first access management network element obtains third identity information from another network element (for example, a first data management network element) in the first network, and then generates the second identity information based on the third identity information.

For example, the first access management network element sends a second request message to the first data management network element. Then, the first access management network element receives a first response message sent by the unified data management network element, where the first response message includes the third identity information.

Optionally, the second request message may include fourth identity information, the first identity information, or an identifier of the first slice. For example, the second request message may be an Nudm_SDM_GET Request, and the second response message may be an Nudm_SDM_GET Response. This is not limited herein.

The implementation 1-1 to the implementation 1-6 are merely examples. The first access management network element may alternatively obtain the second identity information in another implementation. This is not limited herein.

Optionally, the first access management network element may further obtain subscription information associated with the second identity information, and generate the second message by using the subscription information associated with the second identity information. For example, the first access management network element obtains, from a first data management network element, the subscription information associated with the second identity information. Alternatively, the subscription information is configured on the first access management network element.

The subscription information associated with the second identity information may include one or more of the following parameters: an identifier of the second network, an identifier of the second slice, a security algorithm (for example, an encryption algorithm or an integrity protection algorithm), a non-access stratum (non-access stratum, NAS) counter (NAS counter), a PDU session ID, an IP address or a MAC address of a PDU session, or a data network name (data network name, DNN) associated with a PDU session. Optionally, when the second network is a PNI-NPN, the subscription information associated with the second identity information may further include a closed access group information list (closed access group information list, CAG information list). This is not limited herein.

It should be understood that the subscription information may also be referred to as context information or the like. This is not limited herein.

For example, the first access management network element may perform security protection on the second message based on the security algorithm and the NAS counter that are in the subscription information associated with the second identity information.

For another example, the first access management network element may determine, based on the identifier that is of the second slice and that is in the subscription information associated with the second identity information, the identifier that is of the second slice and that is included in the second message.

With reference to the architectures shown in FIG. 7(a) to FIG. 7(d), the following specifically describes a specific implementation in which the first access management network element sends the second message to the second access management network element.

For example, based on the architecture shown in FIG. 7(a), the first access management network element sends the second message to the N3IWF, and the N3IWF forwards the second message to the second access management network element.

For another example, based on the architecture shown in FIG. 7(b), the first access management network element sends the second message to a first session management network element; the first session management network element sends the second message to a first user plane network element; the first user plane network element sends the second message to the N3IWF; and the N3IWF sends the second message to the second access management network element.

For another example, based on the architecture shown in FIG. 7(c), the first access management network element sends the second message to the N3IWF; and the N3IWF forwards the second message to the second access management network element.

For another example, based on the architecture shown in FIG. 7(d), the first access management network element is directly connected to the second access management network element. Therefore, the first access management network element directly sends the second message to the second access management network element.

Based on the embodiment shown in FIG. 8, the first access management network element receives the identifier information that is of the first slice and that is sent by the terminal device. Because the first slice is the slice related to the service in the second network, the first access management network element may learn, based on the identifier information of the first slice, that the terminal device wants to access the second network. Therefore, the first access management network element in the first network requests the second access management network element in the second network to access the second network. It can be learned that the first access management network element in the first network may learn that the terminal device wants to access the second network, and may further control the terminal device to access the second network. According to the technical solution provided in this application, control of the first network over access of the terminal device to the second network can be enhanced.

In addition, in this embodiment of this application, the first access management network element requests to access the second network on behalf of the terminal device, and the terminal device does not directly communicate with the second network. Therefore, the terminal device does not need to establish an IPsec tunnel with a security gateway in the second network, and the terminal device does not need to support an IPsec protocol stack, so that manufacturing costs of the terminal device are reduced.

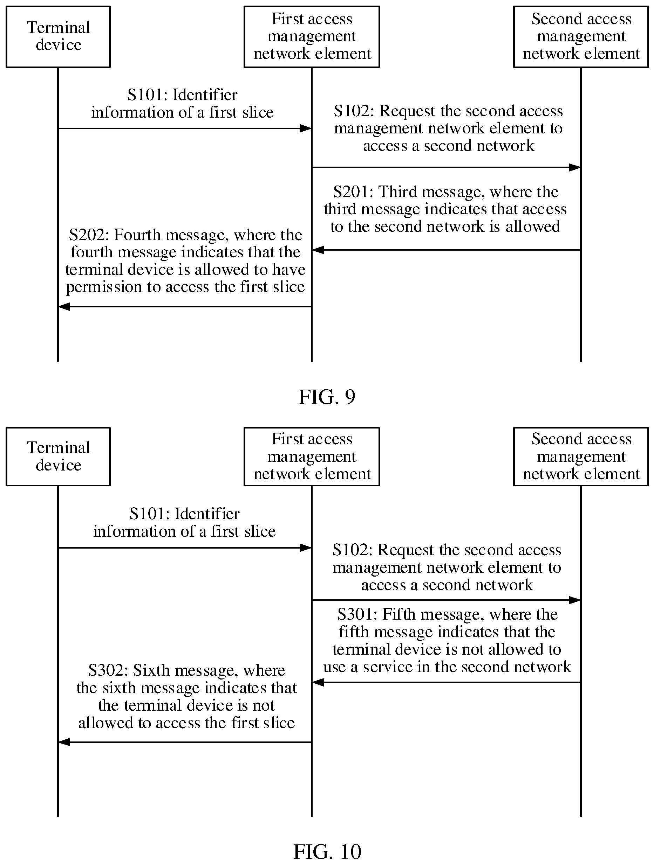

With reference to FIG. 9, the following describes a network interworking method in a registration scenario by using an example. As shown in FIG. 9, the method includes the following steps.

For S101, refer to descriptions of S101 in FIG. 8.

In the registration scenario, step S101 may be specifically implemented as: A terminal device sends a first message to a first access management network element.

The first message is for requesting to register with a first network. For example, the first message may be a registration request message.

Therefore, that the first message includes the identifier information of the first slice may be specifically implemented as: The first message includes requested NSSAI, and the requested NSSAI includes S-NSSAI of the first slice. Optionally, the requested NSSAI may alternatively include S-NSSAI of another network slice. This is not limited herein.

It should be understood that, after the first access management network element receives the first message, the terminal device and another network element in the first network may perform a part of steps in a registration procedure of the first network, for example, all or a part of steps S4 to S14 in the registration procedure shown in FIG. 1A and FIG. 1B. In a process of performing steps S4 to S14 shown in FIG. 1A and FIG. 1B, the terminal device performs an operation performed by the communication device shown in FIG. 1A and FIG. 1B, and the first access management network element performs an operation performed by the first AMF shown in FIG. 1A and FIG. 1B.

For example, the terminal device and the network element in the first network perform an operation such as authentication or requesting an identity. In addition, based on a related step such as authentication in the registration procedure, both the first access management network element and the terminal device may obtain a first security context associated with first identity information. Therefore, the first security context may be used between the terminal device and the first access management network element, to ensure communication security (for example, encryption protection or integrity protection) between the terminal device and the first access management network element.

For S102, refer to descriptions of S102 in FIG. 8.

Step S102 may be specifically implemented as: The first access management network element sends a second message to a second access management network element.

That the second message is for requesting to access a second network may be specifically implemented as: The second message is for requesting to register with the second network. Correspondingly, the second message may be specifically a registration request message.

In this way, the second access management network element may consider the first access management network element as a normal terminal device based on the second message. Based on this manner, the first access management network element achieves an objective of accessing the second network on behalf of the terminal device.

Optionally, the first access management network element may further store an association relationship between the identifier information of the first slice and identifier information of m second slices. Therefore, the second message may include identifier information of n second slices. The n second slices are a subset of the m second slices. Both m and n are integers greater than or equal to 0, and n is less than or equal to m.

For example, that the second message includes the identifier information of the n second slices may be specifically implemented as: The second message includes requested NSSAI, and the requested NSSAI includes S-NSSAI of the n second slices.

It should be understood that, after the second access management network element receives the second message, the first access management network element and the network element in the second network may perform a part of steps in a registration procedure of the second network, for example, all or a part of steps S4 to S16 in FIG. 1A and FIG. 1B. In a process of performing steps S4 to S16 shown in FIG. 1A and FIG. 1B, the first access management network element performs an operation performed by the communication device shown in FIG. 1A and FIG. 1B, and the second access management network element performs an operation performed by the first AMF shown in FIG. 1A and FIG. 1B.

Based on a related step such as authentication in the registration procedure, the first access management network element and the second access management network element may obtain a second security context associated with second identity information. Therefore, the first access management network element and the second access management network element may use the second security context, to ensure communication security (for example, encryption protection or integrity protection) between the first access management network element and the second access management network element.

Optionally, after step S102, the network interworking method may further include steps S201 and S202.

S201: The second access management network element sends a third message to the first access management network element. Correspondingly, the first access management network element receives the third message sent by the second access management network element.

The third message indicates that access to the second network is allowed. Alternatively, the third message indicates that registration with the second network succeeds. For example, the third message may be a registration accept (registration accept) message.

In a possible implementation, that the third message indicates that access to the second network is allowed may be specifically implemented as: The third message indicates that the first access management network element is allowed to access the second network.

Optionally, the third message may further include allowed NSSAI, and the allowed NSSAI includes identifiers of p second slices. For example, the p second slices may be a subset of the n second slices, where p is an integer greater than or equal to 0, and p is less than or equal to n.

Optionally, after the first access management network element receives the third message, the first access management network element may perform a part or all of remaining steps (for example, steps S15 to S18 in FIG. 1A and FIG. 1B) in the registration procedure of the first network, to complete a procedure of registering the terminal device with the first network.

Optionally, the first access management network element may establish a correspondence between the identifier information of the first slice and the second identity information (or other identity information derived from the second identity information).

Optionally, the first access management network element may establish an association relationship between the second security context and the first security context, to ensure communication security between the terminal device and the second network. Optionally, the association relationship between the second security context and the first security context may be determined based on an association relationship between the first identity information and the second identity information, an association relationship between the first identity information and the first security context, and an association relationship between the second identity information and the second security context.

For example, for a message A sent by a related network element (for example, the second access management network element) in the second network, the first access management network element may parse the message A to obtain content carried in the message A, encapsulate all or a part of the content carried in the message A into a message B, perform security protection on the message B by using the first security context, and send the message B obtained after the security protection to the terminal device.

For another example, for a message C that is related to the first slice and that is sent by the terminal device, the first access management network element may parse the message C to obtain content carried in the message C, encapsulate all or a part of the content carried in the message C into a message D, perform security protection on the message D by using the second security context, and send the message D obtained after the security protection to a related network element (for example, the second access management network element) in the second network.

With reference to the architectures shown in FIG. 7(a) to FIG. 7(b), the following specifically describes a specific implementation in which the second access management network element sends the third message to the first access management network element.

For example, based on the architecture shown in FIG. 7(a), the second access management network element sends the third message to the N3IWF, and the N3IWF sends the third message to the first access management network element.

For another example, based on the architecture shown in FIG. 7(b), the second access management network element sends the third message to the N3IWF; the N3IWF sends the third message to a first user plane network element; the first user plane network element sends the third message to a first session management network element; and the first session management network element sends the third message to the first access management network element.

For another example, based on the architecture shown in FIG. 7(c), the second access management network element sends the third message to the N3IWF, and the N3IWF sends the third message to the first access management network element.

For another example, based on the architecture shown in FIG. 7(d), the second access management network element directly sends the third message to the first access management network element.

S202: The first access management network element sends a fourth message to the terminal device based on the third message. Correspondingly, the terminal device receives the fourth message sent by the first access management network element.

The fourth message indicates that the terminal device is allowed to have permission to access the first slice. Optionally, in a possible implementation, the fourth message includes allowed NSSAI, and the allowed NSSAI includes S-NSSAI of the first slice.

Optionally, in the registration scenario, the fourth message may further indicate that the terminal device successfully registers with the first network. For example, the fourth message may be a registration accept message.

Based on the embodiment shown in FIG. 9, the first access management network element receives the identifier information that is of the first slice and that is sent by the terminal device, and requests to access the second network on behalf of the terminal device. When registration with the second network succeeds, the first access management network element enables, by using the fourth message, the terminal device to learn that the terminal device has the permission to access the first slice. In this process, the terminal device does not directly communicate with the second network. Therefore, the terminal device does not need to establish an IPsec tunnel with a security gateway in the second network, and the terminal device does not need to support an IPsec protocol stack, so that manufacturing costs of the terminal device are reduced.

With reference to FIG. 10, the following describes another network interworking method in a registration scenario by using an example. As shown in FIG. 10, the method includes the following steps.

For S101, refer to descriptions of S101 in FIG. 9.

For S102, refer to descriptions of S102 in FIG. 9.

Optionally, the method may further include steps S301 and S302.

S301: The second access management network element sends a fifth message to the first access management network element. Correspondingly, the first access management network element receives the fifth message sent by the second access management network element.

The fifth message indicates that the terminal device is not allowed to use a service in the second network.

Optionally, the fifth message may use any one of the following designs.

Design 1: The fifth message indicates that registration with the second network fails.

Based on the design 1, the fifth message may be a registration reject message.

Optionally, based on the design 1, the fifth message may include rejected NSSAI, and the rejected NSSAI may include S-NSSAI of the n second slices.

Design 2: The fifth message indicates that registration with the second network succeeds, but permission to access the second slice is not obtained.

Based on the design 2, the fifth message may be a registration accept message, and the fifth message includes rejected NSSAI. The rejected NSSAI may include S-NSSAI of the n second slices.

With reference to the architectures shown in FIG. 7(a) to FIG. 7(b), the following specifically describes a specific implementation in which the second access management network element sends the fifth message to the first access management network element.

For example, based on the architecture shown in FIG. 7(a) or FIG. 7(c), the second access management network element sends the fifth message to the N3IWF, and the N3IWF sends the fifth message to the first access management network element.

For another example, based on the architecture shown in FIG. 7(b), the second access management network element sends the fifth message to the N3IWF; the N3IWF sends the fifth message to a first user plane network element; the first user plane network element sends the fifth message to a first session management network element; and the first session management network element sends the fifth message to the first access management network element.

For another example, based on the architecture shown in FIG. 7(d), the second access management network element directly sends the fifth message to the first access management network element.

S302: The first access management network element sends a sixth message to the terminal device based on the fifth message. Correspondingly, the terminal device receives the sixth message sent by the first access management network element.

The sixth message indicates that the terminal device is not allowed to access the first slice. It should be understood that, that the terminal device is not allowed may be described in another manner. For example, the terminal device is not provided (not provide), the terminal device is abolished/revoked (revoke), the terminal device is rejected (reject), the terminal device is disabled (disable), or the terminal device is deactivated (deactivate). This is not limited in this embodiment of this application.

In a possible implementation, the sixth message may include rejected NSSAI, and the rejected NSSAI includes S-NSSAI of the first slice.

Based on the embodiment shown in FIG. 10, the first access management network element receives the identifier information that is of the first slice and that is sent by the terminal device, and requests to access the second network on behalf of the terminal device. When registration with the second network fails, or when registration with the second network succeeds, but access permission to any second slice is not obtained, the first access management network element enables, by using the sixth message, the terminal device to learn that the terminal device does not have the permission to access the first slice. In this process, the terminal device does not directly communicate with the second network. Therefore, the terminal device does not need to establish an IPsec tunnel with a security gateway, and the terminal device does not need to support an IPsec protocol stack, so that manufacturing costs of the terminal device are reduced.

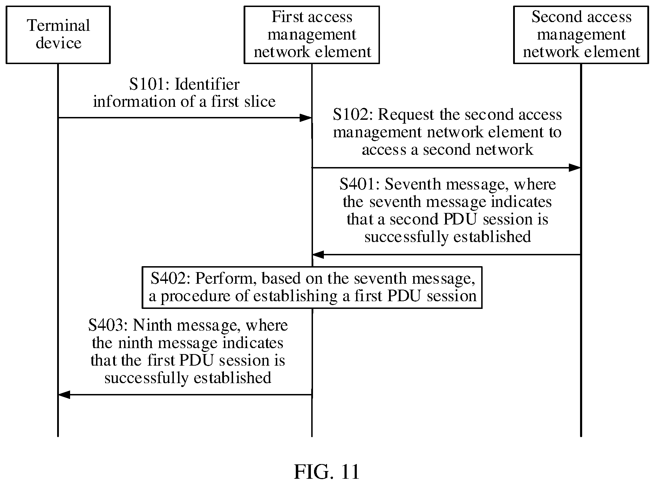

With reference to FIG. 11, the following describes a network interworking method in a PDU session establishment scenario by using an example. As shown in FIG. 11, the method includes the following steps.

For S101, refer to descriptions of S101 in FIG. 8.

In the PDU session establishment scenario, step S101 may be specifically implemented as: A terminal device sends a first message to a first access management network element. The first message may be for requesting to establish a first PDU session associated with the first slice.

In a possible design, the first message is a first PDU session establishment request message. Therefore, that the first message includes an identifier of the first slice is that the first PDU session establishment request message includes the identifier of the first slice.

In another possible design, the first message may include the identifier information of the first slice and the first PDU session establishment request message.

The first PDU session establishment request message is for requesting to establish the first PDU session. The first PDU session establishment request message may include an identifier of the first PDU session.

It should be understood that the first PDU session may be a PDU session based on a user plane or a PDU session based on a control plane, to adapt to different interworking architectures of a first network and a second network.

For example, in the architectures shown in FIG. 7(a), FIG. 7(b), or FIG. 7(d), a first user plane network element in the first network has a tunnel (or a connection) for communicating with a related network element in the second network. Therefore, the first user plane network element may be responsible for forwarding a data packet between the first PDU session and a second PDU session. Therefore, the first PDU session may be established as the PDU session based on the user plane.

For another example, in the architecture shown in FIG. 7(c), a first user plane network element in the first network does not have a tunnel (or a connection) for communicating with a related network element in the second network. Consequently, the first user plane network element cannot be responsible for forwarding a data packet between the first PDU session and a second PDU session. As a result, the first PDU session needs to be established as the PDU session based on the control plane. In other words, the first access management network element is responsible for forwarding a data packet between the first PDU session and the second PDU session.

Based on the architecture shown in FIG. 7(c), when the first PDU session is the PDU session based on the control plane, an uplink transmission path of a data packet in the first PDU session is: the UE -> the first access management network element -> the N3IWF, and a downlink transmission path of a data packet in the first PDU session is: the N3IWF -> the first access management network element -> the UE.

For S102, refer to descriptions of S102 in FIG. 8.

In the PDU session establishment scenario, step S102 may be specifically implemented as: The first access management network element sends a second message to a second access management network element.

That the second message is for requesting to access a second network may be specifically implemented as: The second message is for requesting to establish the second PDU session. For example, the second message may include a second PDU session establishment request message. Alternatively, the second message is the second PDU session establishment request message.

The second PDU session establishment request message is for requesting to establish the second PDU session, and the second PDU session establishment request message may include an identifier of the second PDU session. The identifier of the second PDU session is different from the identifier of the first PDU session. Optionally, the identifier of the second PDU session may be configured by the first access management network element.

Optionally, the first access management network element may obtain an IP address of the first PDU session, and send the address of the first PDU session to the second access management network element.

For example, the first access management network element may obtain the IP address of the first PDU session from a first session management network element. The first session management network element is a session management network element that is in the first network and that is responsible for managing the first PDU session. In this way, the first access management network element may encapsulate the IP address of the first PDU session into the second message, so that the second access management network element can obtain the IP address of the first PDU session based on the second message.

Optionally, the IP address of the first PDU session may be carried in the second message.

It should be understood that the second message may be processed (for example, encryption protection or integrity protection) by using a second security context obtained by a first access network device in a process of registering with the second network.

After receiving the second message that is for requesting to establish the second PDU session, the second access management network element may perform a procedure of establishing the second PDU session.

Optionally, the second message includes the IP address of the first PDU session. The second access management network element may obtain the IP address of the first PDU session from the first access management network element. The second access management network element may send the IP address of the first PDU session to a second user plane network element by using a second session management network element. The second session management network element and the second user plane network element belong to the second network. In addition, in the process of establishing the second PDU session, the second session management network element configures an IP address of the second PDU session, and sends the IP address of the second PDU session to the second user plane network element. Therefore, the second user plane network element may learn an association relationship between the IP address of the first PDU session and the IP address of the second PDU session, so that the second user plane network element may be responsible for forwarding a data packet between the first PDU session and the second PDU session.

Optionally, the second message may alternatively not include the IP address of the first PDU session. For example, for the foregoing architecture in FIG. 7(a) or FIG. 7(b), or another similar architecture, the N3IWF is connected to one first user plane network element in the first network, so that the N3IWF forwards data between the second PDU session and the first PDU session by using the first user plane network element. For example, the N3IWF forwards, to the first user plane network element, downlink user plane data transmitted by the second user plane network element, and the first user plane network element forwards the downlink user plane data to the terminal device.

Optionally, based on the architectures shown in FIG. 7(a) to FIG. 7(c), in the procedure of establishing the second PDU session, a connection between the N3IWF and a second user plane network element needs to be configured, to ensure normal forwarding of a data packet between the first PDU session and the second PDU session. The second user plane network element is a user plane network element that serves the second PDU session and that is in the second network.

For example, in a process in which the second network establishes the second PDU session for the terminal device, the N3IWF obtains a first routing rule, where the first routing rule is for forwarding a data packet of the second PDU session. The N3IWF forwards the data packet of the second PDU session based on the first routing rule.

Optionally, the first routing rule indicates to forward an uplink data packet whose source address is the IP address of the second PDU session to the second user plane network element serving the second PDU session. Therefore, that the N3IWF forwards the data packet of the second PDU session based on the first routing rule may be specifically implemented as: The N3IWF receives an uplink data packet of the second PDU session from a first user plane network element or a first access management network element in the first network. The N3IWF sends, based on the first routing rule, the uplink data packet of the second PDU session to the second user plane network element serving the second PDU session.

Optionally, the first routing rule alternatively indicates to forward a downlink data packet whose destination address is the IP address of the second PDU session to the first access management network element or the first user plane network element in the first network. Therefore, hat the N3IWF forwards the data packet of the second PDU session based on the first routing rule includes: The N3IWF receives a downlink data packet of the second PDU session from the second user plane network element serving the second PDU session. The N3IWF sends the uplink data packet of the second PDU session to the first user plane network element or the first access management network element in the first network based on the first routing rule.

Optionally, when the second PDU session is successfully established, the method may further include the following steps.

S401: The second access management network element sends a seventh message to the first access management network element. Correspondingly, the first access management network element receives the seventh message sent by the second access management network element.

The seventh message indicates that the second PDU session is successfully established.

With reference to the architectures shown in FIG. 7(a) to FIG. 7(b), the following specifically describes a specific implementation in which the second access management network element sends the seventh message to the first access management network element.

For example, based on the architecture shown in FIG. 7(a) or FIG. 7(c), the second access management network element sends the fifth message to the N3IWF, and the N3IWF sends the seventh message to the first access management network element.

For another example, based on the architecture shown in FIG. 7(b), the second access management network element sends the seventh message to the N3IWF; the N3IWF sends the seventh message to a first user plane network element; the first user plane network element sends the seventh message to a first session management network element; and the first session management network element sends the seventh message to the first access management network element.

For another example, based on the architecture shown in FIG. 7(d), the second access management network element directly sends the seventh message to the first access management network element.

S402: The first access management network element performs, based on the seventh message, a procedure of establishing the first PDU session.

In the procedure of establishing the second PDU session, the first access management network element may obtain the IP address of the second PDU session from the second access management network element. In the procedure of establishing the first PDU session, the first access management network element may send the IP address of the second PDU session to the first user plane network element. In addition, in the procedure of establishing the first PDU session, the first session management network element configures the IP address of the first PDU session, and sends the IP address of the first PDU session to the first user plane network element. Therefore, the first user plane network element may learn an association relationship between the IP address of the first PDU session and the IP address of the second PDU session. The first user plane network element forwards a data packet of the terminal device between the first PDU session and the second PDU session based on the association relationship.

For example, that the first access management network element may send the IP address of the second PDU session to the first user plane network element may be specifically implemented as: The first access management network element sends an eighth message to the first session management network element, where the eighth message includes the IP address of the second PDU session. Then, the first session management network element obtains the IP address of the second PDU session based on the eighth message, and sends the IP address of the second PDU session to the first user plane network element. Optionally, the eighth message further includes an identifier of the first PDU session and an identifier of the second PDU session.

For example, the eighth message may be a PDU session context creation request message, for example, an Nsmf_PDUSession_CreateSMContext Request.

For example, the first session management network element may send a second routing rule to the first user plane network element, where the second routing rule includes the IP address of the first PDU session and the IP address of the second PDU session, to achieve an objective of sending the IP address of the first PDU session and the IP address of the second PDU session to the first user plane network element.

For example, that the first session management network element may send a second routing rule to the first user plane network element may be specifically implemented as: The first session management network element sends an N4 session establishment/modification message to the first user plane network element, where the N4 session establishment/modification message includes the second routing rule.

For example, the second routing rule may include a packet detection rule (packet detection rule, PDR) and a forwarding action rule (forwarding action rule, FAR).

Optionally, the second routing rule indicates to modify a source address of an uplink data packet from the IP address of the first PDU session to the IP address of the second PDU session, and send a modified uplink data packet to the second network (for example, the second user plane network element).

For example, for the uplink data packet, the PDR in the second routing rule may include the IP address of the first PDU session, and the FAR corresponding to the PDR may include the IP address of the second PDU session. Based on the second routing rule, when the source address of the uplink data packet matches the IP address that is of the first PDU session and that is included in the PDR, the first user plane network element modifies the source address of the uplink data packet to the IP address of the second PDU session based on the FAR corresponding to the PDR, and sends the modified uplink data packet to the second network.

Optionally, the second routing rule further indicates to modify a destination address of a downlink data packet from the IP address of the second PDU session to the IP address of the first PDU session, and send a modified uplink data packet to an access network device serving the terminal device.

For another example, for the downlink data packet, the PDR in the second routing rule may include the IP address of the second PDU session, and the FAR corresponding to the PDR may include the IP address of the first PDU session. Based on the second routing rule, when the destination address of the downlink data packet matches the IP address that is of the second PDU session and that is included in the PDR, the first user plane network element modifies a destination IP address of the downlink data packet to the IP address of the first PDU session based on the FAR corresponding to the PDR, and sends the modified downlink data packet to the access network device serving the terminal device. The access network device forwards the downlink data packet to the terminal device.

The first user plane network element and the first session management network element belong to the first network. For example, the first user plane network element may be a UPF or a network element that takes on a user plane function in a future network. The first session management network element may be an SMF or a network element that takes on a session management function in a future network.

When the first PDU session is successfully established, the first access management network element may perform the following step S403.

S403: The first access management network element sends a ninth message to the terminal device. Correspondingly, the terminal device receives the ninth message sent by the first access management network element.

The ninth message indicates that the first PDU session is successfully established.

Based on the embodiment shown in FIG. 11, when the second PDU session is successfully established, the first access management network element initiates the procedure of establishing the first PDU session, to establish the first PDU session. In this way, the first PDU session can be associated with the second PDU session, so that a data channel from the terminal device to the second network is established.

The following describes a specific implementation in which the network interworking method shown in FIG. 11 is applied to the architecture in which the first network interworks with the second network shown in FIG. 7(a) or FIG. 7(b).

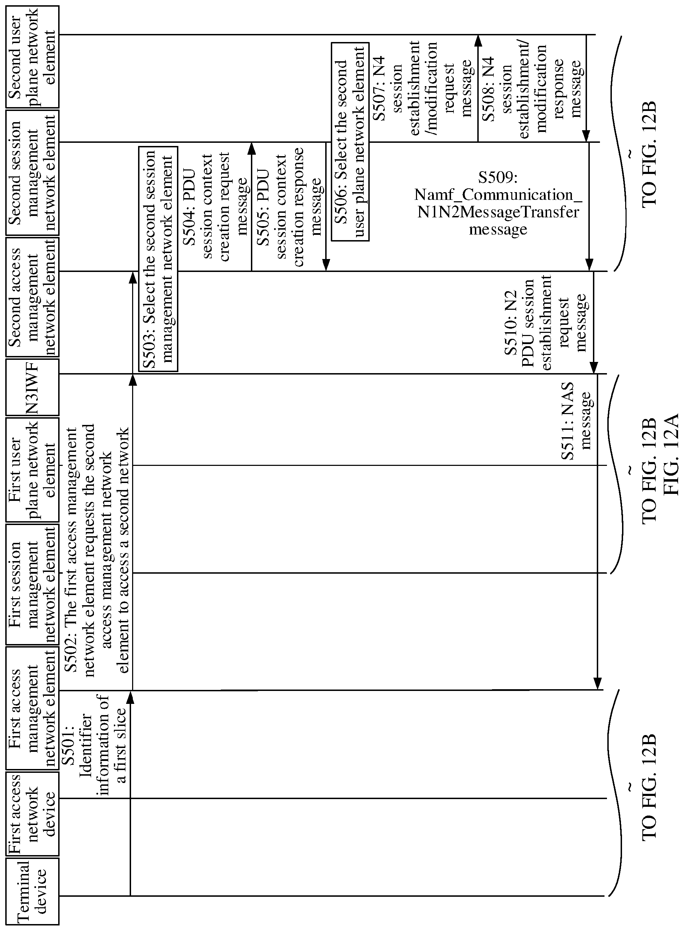

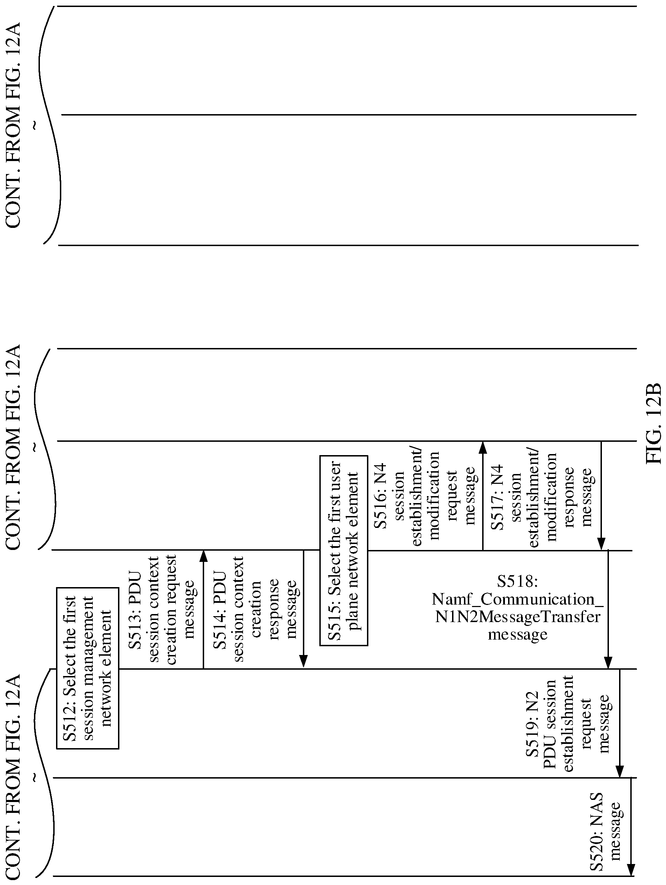

As shown in FIG. 12A and FIG. 12B, the network interworking method includes the following steps.

For S501, refer to step S101 in FIG. 11.

For S502, refer to step S102 in FIG. 11.

S503: The second access management network element selects a second session management network element.

S504: The second access management network element sends a PDU session context creation request message to the second session management network element. Correspondingly, the second session management network element receives the PDU session context creation request message from the second access management network element.

The PDU session context creation request message includes an identifier of a second PDU session.

For example, the PDU session context creation request message may have another name, for example, an Nsmf_PDUSession_CreateSMContext Request. This is not limited herein.

The second session management network element may create a context of the second PDU session based on the PDU session context creation request message.

S505: The second session management network element sends a PDU session context creation response message to the second access management network element. Correspondingly, the second access management network element receives the PDU session context creation response message from the second session management network element.

S506: The second session management network element selects a second user plane network element.

The second session management network element configures an IP address of the second PDU session.

S507: The second session management network element sends an N4 session establishment/modification request (N4 Session Establishment/Modification Request) message to the second user plane network element. Correspondingly, the second user plane network element receives the N4 session establishment/modification request message from the second session management network element.

The N4 session establishment/modification request message is for creating a context of an N4 session of the second PDU session.

In this embodiment of this application, the N4 session establishment/modification request message includes the IP address of the second PDU session.

It should be understood that the N4 session establishment/modification request message may include a third routing rule. The third routing rule is for sending a downlink data packet of the second PDU session to an N3IWF. In other words, the third routing rule is for sending, to the N3IWF, a downlink data packet whose destination address is the IP address of the second PDU session.

S508: The second user plane network element sends an N4 session establishment/modification response (N4 Session Establishment/Modification Response) message to the second session management network element. Correspondingly, the second session management network element receives the N4 session establishment/modification response message from the second user plane network element.

S509: The second session management network element sends an Namf_Communication_N1N2MessageTransfer message to the second access management network element. Correspondingly, the second access management network element receives the Namf_Communication_N1N2MessageTransfer message sent by the second session management network element.

The Namf_Communication_N1N2MessageTransfer message includes an identifier of the second PDU session, N2 session management (session management, SM) information, and an N1 SM container (container).

For example, the N2 SM information may include the identifier of the second PDU session, quality of service (quality of service, QoS) configuration information, core network (core network, CN) tunnel information, and a type of the second PDU session. It should be understood that the N2 SM information may alternatively directly include the first routing rule, or a parameter (for example, the IP address of the second PDU session) that is for configuring the first routing rule.

For example, the N1 SM container may include a PDU session establishment accept (PDU session establishment accept) message. The PDU session establishment accept message may include the QoS rule, the type of the second PDU session, and the IP address of the second PDU session. It should be understood that the N1 SM container may alternatively include other parameters, which are not listed one by one herein.

S510: The second access management network element sends an N2 PDU session establishment request message to the N3IWF. Correspondingly, the N3IWF receives the N2 PDU session establishment request message sent by the second access management network element.

The N2 PDU session establishment request message includes the N2 SM information and a NAS message. The NAS message includes the identifier of the second PDU session and the N1 SM container.

Optionally, the N3IWF may obtain the first routing rule from an N2 SM message based on the N2 SM information. Alternatively, the N3IWF may configure the first routing rule based on the parameter that is included in the N2 SM information and that is for configuring the first routing rule.

For example, in the architecture shown in FIG. 7(a) or FIG. 7(b), the first routing rule indicates to forward an uplink data packet whose source address is the IP address of the second PDU session to the second user plane network element. Alternatively, the first routing rule indicates to forward a downlink data packet whose destination address is the IP address of the second PDU session to a first user plane network element.

S511: The N3IWF sends the NAS message to the first access management network element. Correspondingly, the first access management network element receives the NAS message sent by the N3IWF.

For example, based on the architecture shown in FIG. 7(a), the N3IWF sends the NAS message to the first access management network element.

For example, based on the architecture shown in FIG. 7(b), the N3IWF sends the NAS message to the first user plane network element, the first user plane network element sends the NAS message to a first session management network element, and the first session management network element sends the NAS message to the first access management network element.

It should be understood that, in step S510 and step S511, the second access management network element may be enabled to send a PDU session establishment accept message to the first access management network element. This is equivalent to implementing step S401 in FIG. 11.

After step S511 is completed, the N3IWF may send an N2 PDU session establishment response message to the second access management network element.

It should be understood that only a part of steps in the procedure of establishing the second PDU session are described in steps S502 to S511. The procedure of establishing the second PDU session may further include another step. This is not limited herein.

S512: The first access management network element selects the first session management network element.

S513: The first access management network element sends a PDU session context creation request message to the first session management network element. Correspondingly, the first session management network element receives the PDU session context creation request message from the first access management network element.

The PDU session context creation request message includes an identifier of a first PDU session and the IP address of the second PDU session.

The first session management network element may create a context of the first PDU session based on the PDU session context creation request message.

S514: The first session management network element sends a PDU session context creation response message to the first access management network element. Correspondingly, the first access management network element receives the PDU session context creation response message from the first session management network element.

S515: The first session management network element selects the first user plane network element.

The first session management network element configures an IP address of the first PDU session.

S516: The first session management network element sends an N4 session establishment/modification request message to the first user plane network element. Correspondingly, the first user plane network element receives the N4 session establishment/modification request message from the first session management network element.

The N4 session establishment/modification request message is for creating a context of an N4 session of the first PDU session.

In this embodiment of this application, the N4 session establishment/modification request message includes the IP address of the first PDU session and the IP address of the second PDU session.

For example, the N4 session establishment/modification request message includes a second routing rule. For specific descriptions of the second routing rule, refer to the foregoing specific descriptions. Details are not described herein again.

S517: The first user plane network element sends an N4 session establishment/modification response message to the first session management network element. Correspondingly, the second session management network element receives the N4 session establishment/modification response message from the second user plane network element.

S518: The first session management network element sends an Namf_Communication_N1N2MessageTransfer message to the first access management network element. Correspondingly, the first access management network element receives the Namf_Communication_N1N2MessageTransfer message sent by the first session management network element.

The Namf_Communication_N1N2MessageTransfer message includes the identifier of the first PDU session, N2 session management (session management, SM) information, and an N1 SM container (container).

For example, the N2 SM information may include the identifier of the first PDU session, quality of service (quality of service, QoS) configuration information, core network (core network, CN) tunnel information, and a type of the first PDU session. It should be understood that the N2 SM information may alternatively include a fourth routing rule, or a parameter (for example, the IP address of the first PDU session) that is for configuring the fourth routing rule. The fourth routing rule is used by a first access network device to forward a data packet of the first PDU session.

For example, the N1 SM container may include a PDU session establishment accept (PDU session establishment accept) message. The PDU session establishment accept message may include the QoS rule, the type of the first PDU session, and the IP address of the first PDU session. It should be understood that the N1 SM container may alternatively include other parameters, which are not listed one by one herein.

S519: The first access management network element sends an N2 PDU session establishment request message to the first access network device. Correspondingly, the first access network device receives the N2 PDU session establishment request message sent by the first access management network element.

The N2 PDU session establishment request message includes the N2 SM information and a NAS message. The NAS message includes the identifier of the first PDU session and the N1 SM container.

The first access network device may obtain the fourth routing rule from the N2 SM information based on the N2 SM information. Alternatively, the first access network device is configured to configure the fourth routing rule based on the parameter that is included in the N2 SM information and that is for configuring the fourth routing rule.

The fourth routing rule indicates to forward an uplink data packet whose source address is the IP address of the first PDU session to the first user plane network element.

The fourth routing rule alternatively indicates to forward a downlink data packet whose destination address is the IP address of the first PDU session to a terminal device.

S520: The first access network device sends a NAS message to the terminal device. Correspondingly, the terminal device receives the NAS message from the first access network device.

The NAS message includes the N1 SM container, and the N1 SM container includes the PDU session establishment accept message.

It should be understood that, in steps S519 and S520, the first access management network element may be enabled to send the PDU session establishment accept message to the terminal device. This is equivalent to implementing S402 in FIG. 11.

After step S520, the first access network device may send an N2 PDU session establishment response message to the first access management network element.

It should be understood that only a part of steps in the procedure of establishing the first PDU session are described in steps S512 to S520. The procedure of establishing the first PDU session may further include another step. This is not limited herein.

Based on the embodiment shown in FIG. 12A and FIG. 12B, in the architecture shown in FIG. 7(a) or FIG. 7(b), the first PDU session is established in the first network, the second PDU session is established in the second network, and the first PDU session is associated with the second PDU session (for example, the first user plane network element obtains the IP address of the first PDU session and the IP address of the second PDU session). In this way, the terminal device may transmit data to the second network via the first network, or the terminal device may receive, via the first network, data delivered by the second network.

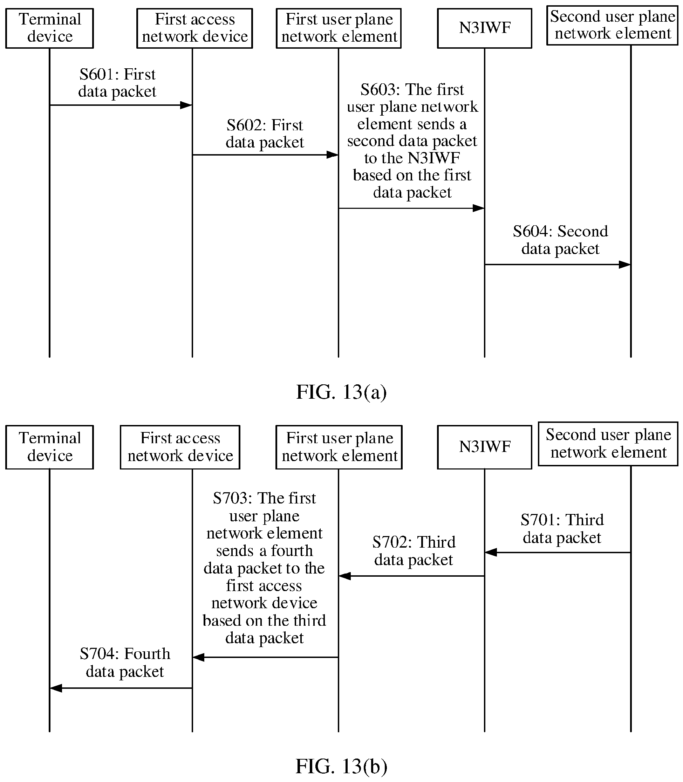

Based on the embodiment shown in FIG. 12A and FIG. 12B, with reference to FIG. 13(a), the following specifically describes a procedure of transmitting uplink data in the architecture shown in FIG. 7(a) or FIG. 7(b). As shown in FIG. 13(a), the method includes the following steps.

S601: A terminal device sends a first data packet to a first access network device.

The first data packet may include an IP address of a first PDU session.

S602: The first access network device sends the first data packet to a first user plane network element.

In a possible implementation, the first access network device forwards the first data packet to the first user plane network element based on a routing rule configured in a procedure of establishing the first PDU session.

S603: The first user plane network element sends a second data packet to an N3IWF based on the first data packet.

In a possible implementation, the first user plane network element replaces the IP address that is of the first PDU session and that is in the first data packet with an IP address of a second PDU, to generate the second data packet. The first user plane network element sends the second data packet to the N3IWF through a preset security tunnel between the first user plane network element and the N3IWF.

S604: The N3IWF sends the second data packet to a second user plane network element.

In a possible implementation, the N3IWF forwards the second data packet to the second user plane network element based on a routing rule configured in a procedure of establishing the second PDU session.

Optionally, after receiving the second data packet, the second user plane network element may forward the second data packet to a corresponding data network.

Based on the embodiment shown in FIG. 13(a), the terminal device may send data to the second network via the first network.

Based on the embodiment shown in FIG. 12A and FIG. 12B, with reference to FIG. 13(b), the following specifically describes a procedure of transmitting downlink data in the architecture shown in FIG. 7(a) or FIG. 7(b). As shown in FIG. 13(b), the method includes the following steps.

S701: A second user plane network element sends a third data packet to an N3IWF.

The third data packet includes an IP address of a second PDU session.

Optionally, the third data packet may be sent by a data network to the second user plane network element.

S702: The N3IWF sends the third data packet to a first user plane network element.

In a possible implementation, the N3IWF sends the third data packet to the first user plane network element through a preset security tunnel between the N3IWF and the first user plane network element.

Optionally, the N3IWF forwards the third data packet to the first user plane network element based on a first routing rule configured in a procedure of establishing the second PDU session.

S703: The first user plane network element sends a fourth data packet to a first access network device based on the third data packet.

In a possible implementation, the first user plane network element replaces the IP address that is of the second PDU session and that is in the third data packet with an IP address of a first PDU session, to generate the fourth data packet. The first user plane network element sends the fourth data packet to the first access network device based on a second routing rule configured in a procedure of establishing the first PDU session.

S704: The first access network device sends the fourth data packet to a terminal device.

Based on the embodiment shown in FIG. 13(b), the terminal device may obtain data from the second network via the first network.

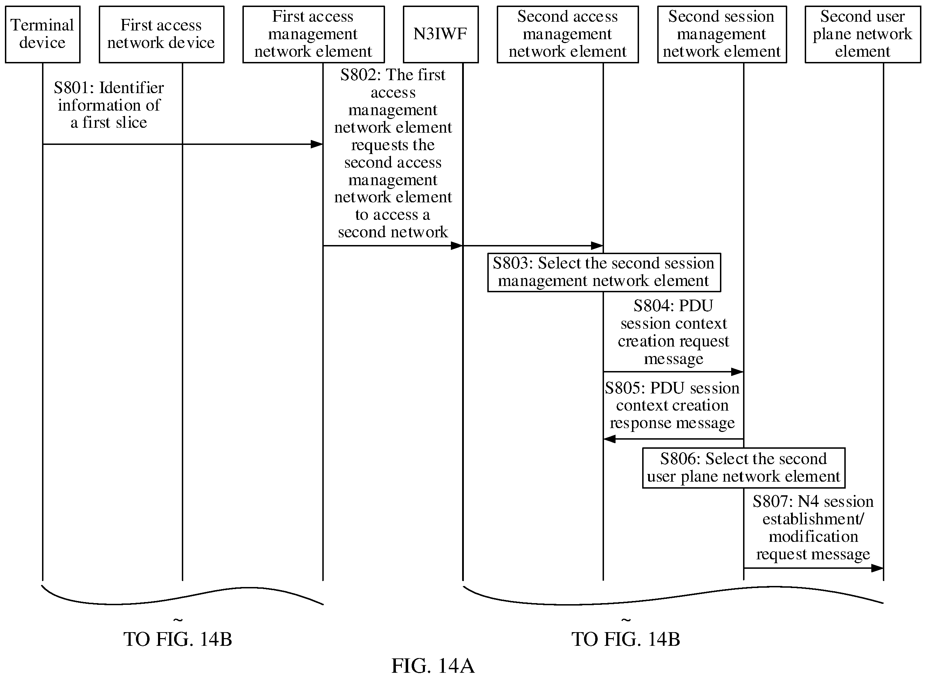

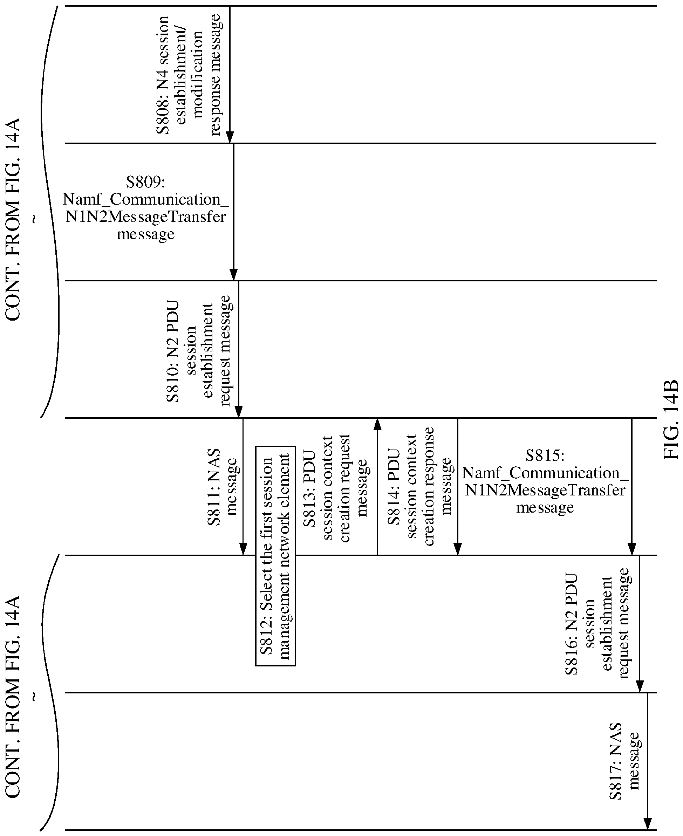

The following describes a specific implementation in which the network interworking method shown in FIG. 11 is applied to the architecture in which the first network interworks with the second network shown in FIG. 7(c). As shown in FIG. 14A and FIG. 14B, the network interworking method includes the following steps.

S801 to S814 are similar to steps S510 to S514. For specific descriptions thereof, refer to the embodiment shown in FIG. 12A and FIG. 12B. Details are not described herein again.

Optionally, in S810, the N3IWF may obtain the first routing rule from an N2 SM message based on the N2 SM information. Alternatively, the N3IWF may configure the first routing rule based on the parameter that is included in the N2 SM information and that is for configuring the first routing rule.

For example, in the architecture shown in FIG. 7(c), the first routing rule indicates to forward an uplink data packet whose source address is the IP address of the second PDU session to the second user plane network element. Alternatively, the first routing rule indicates to forward a downlink data packet whose destination address is the IP address of the second PDU session to the first access management network element.

Optionally, in step S813, the PDU session context creation request message sent by the first access management network element to the first session management network element may include third indication information. The third indication information indicates that the first access management network element is responsible for transmitting a data packet of the first PDU session. Therefore, the first session management network element may not select the first user plane network element, and does not need to perform an interaction operation (for example, sending an N4 session establishment/modification request message to the first user plane network element, or receiving an N4 session establishment/modification response message from the first user plane network element) with the first user plane network element.

Optionally, after step S813, the first session management network element may alternatively select the first user plane network element, and perform an interaction operation with the first user plane network element. It should be understood that, in the architecture shown in FIG. 7(c), even if the first session management network element selects the first user plane network element, the first user plane network element cannot be actually responsible for transmitting a data packet between the first PDU session and the second PDU session.

S815: The first session management network element sends an Namf_Communication_N1N2MessageTransfer message to the first access management network element. Correspondingly, the first access management network element receives the Namf_Communication_N1N2MessageTransfer message sent by the first session management network element.

The Namf_Communication_N1N2MessageTransfer message includes the identifier of the first PDU session, N2 session management (session management, SM) information, and an N1 SM container (container).

Optionally, after receiving the Namf_Communication_N1N2MessageTransfer message, the first access management network element may configure a fifth routing rule. The fifth routing rule is used by the first access management network element to be responsible for forwarding a data packet between the first PDU session and the second PDU session.

For example, the fifth routing rule is for modifying a source address of an uplink data packet from the IP address of the first PDU session to the IP address of the second PDU session, and forwarding a modified uplink data packet to the second network (for example, the N3IWF or the second user plane network element).

For example, the fifth routing rule is further for modifying a destination IP address of a downlink data packet from the IP address of the second PDU session to the IP address of the first PDU session, and forwarding a modified downlink data packet to the first access network device.

S812 to S815 are optional. For S816 and S817, refer to step S519 and S520 in FIG. 11.

Based on the embodiment shown in FIG. 14A and FIG. 14B, in the architecture shown in FIG. 7(c), the first PDU session based on a control plane is established in the first network, and the second PDU session based on a user plane is established in the second network. In this way, the terminal device may transmit data to the second network via the first network, and the terminal device may receive, via the first network, data delivered by the second network.

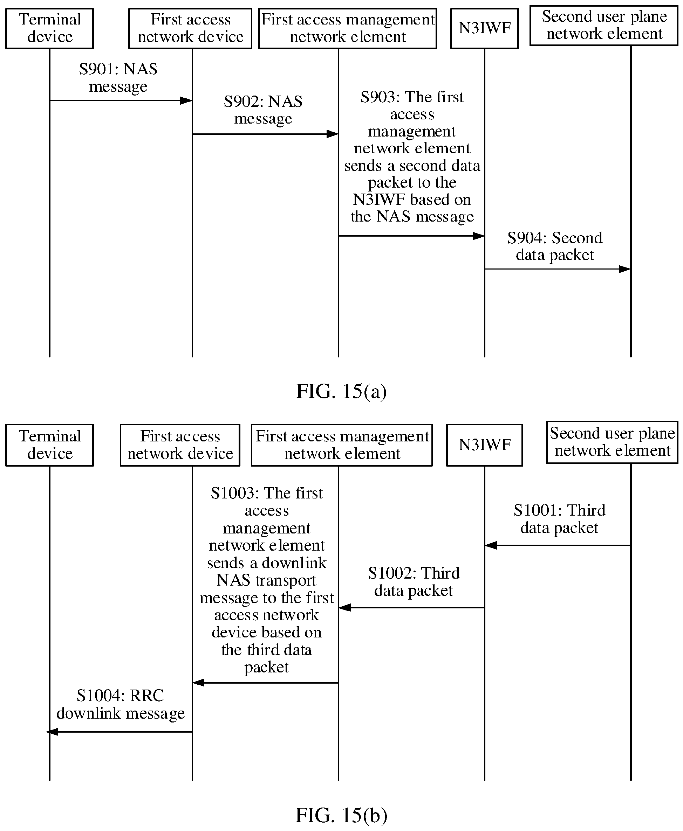

Based on the embodiment shown in FIG. 14A and FIG. 14B, with reference to FIG. 15(a), the following specifically describes a procedure of transmitting uplink data in the architecture shown in FIG. 7(c). As shown in FIG. 15(a), the method includes the following steps.

S901: A terminal device sends a NAS message to a first access network device.

The NAS message includes an identifier of a first PDU session and a first data packet.

S902: The first access network device sends the NAS message to a first access management network element.

It should be understood that, for the NAS message, the first access network device transparently transmits the NAS message only between the terminal device and the first access management network element, and does not perform other processing on the NAS message.

S903: The first access management network element sends a second data packet to an N3IWF based on the NAS message.

In a possible implementation, the first access management network element replaces an IP address that is of the first PDU session and that is in the first data packet with an IP address of a second PDU, to generate the second data packet. The first access management network element sends the second data packet to the N3IWF through a security tunnel between the first access management network element and the N3IWF.

S904: The N3IWF sends the second data packet to a second user plane network element.

In a possible implementation, the N3IWF forwards the second data packet to the second user plane network element based on a routing rule configured in a procedure of establishing the second PDU session.

Optionally, after receiving the second data packet, the second user plane network element may forward the second data packet to a corresponding data network.

Based on the embodiment shown in FIG. 15(a), the terminal device may send data to the second network via the first network.

Based on the embodiment shown in FIG. 14A and FIG. 14B, with reference to FIG. 15(b), the following specifically describes a procedure of transmitting downlink data in the architecture shown in FIG. 7(c). As shown in FIG. 15(b), the method includes the following steps.

S1001: A second user plane network element sends a third data packet to an N3IWF.

The third data packet includes an IP address of a second PDU session.

Optionally, the third data packet may be sent by a data network to the second user plane network element.

S1002: The N3IWF sends the third data packet to a first access management network element.

In a possible implementation, the N3IWF sends the third data packet to the first access management network element through a preset security tunnel between the N3IWF and the first access management network element.

Optionally, the N3IWF forwards the third data packet to the first access management network element based on a first routing rule configured in a procedure of establishing the second PDU session.

S1003: The first access management network element sends a downlink NAS transport (downlink NAS transport) message to a first access network device based on the third data packet.

The downlink NAS transport (downlink NAS transport) message includes an identifier of a first PDU session and a fourth data packet.

Optionally, the first access management network element replaces the IP address that is of the second PDU session and that is in the third data packet with an IP address of the first PDU session, to generate the fourth data packet.

S1004: The first access network device sends a radio resource control (radio resource control, RRC) downlink message to a terminal device.

The RRC downlink message includes the fourth data packet.

Based on the embodiment shown in FIG. 15(b), the terminal device can receive data in the second network via the first network.

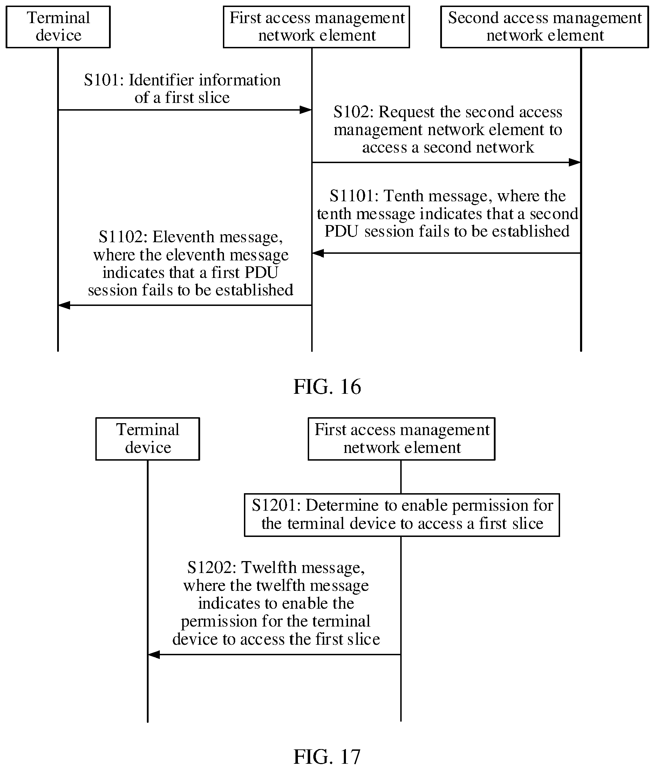

With reference to FIG. 16, the following describes another network interworking method in a PDU session establishment scenario by using an example. As shown in FIG. 12A and

FIG. 12B, the method includes the following steps.

For S101, refer to descriptions of S101 in FIG. 11.

For S102, refer to descriptions of S 102 in FIG. 11.

Optionally, when a second PDU session fails to be established, the method may further include the following steps.

S1101: The second access management network element sends a tenth message to the first access management network element. Correspondingly, the first access management network element receives the tenth message sent by the second access management network element.

The tenth message indicates that the second PDU session fails to be established.

S1102: The first access management network element sends an eleventh message to the terminal device based on the tenth message. Correspondingly, the terminal device receives the eleventh message sent by the first access management network element.

The eleventh message indicates that a first PDU session fails to be established.

Based on the embodiment shown in FIG. 16, when the second PDU session fails to be established, the first access management network element only needs to send the eleventh message to the terminal device, and does not need to perform some other steps in a PDU session establishment procedure in a related technology, to help reduce signaling overheads and corresponding resource consumption.

Optionally, during actual application, in some cases, the terminal device needs to have permission to access the second network via the first network, to use a service provided by the second network. For example, the first network is a private network, and the second network is a public network. When an employee needs to have a video conference with a customer, a terminal device used by the employee needs to have permission to access the public network from the private network of a company, so as to establish, via the public network, a related connection of the video conference with a terminal device used by the customer.

In some other cases, the terminal device does not need to have the permission to access the second network via the first network, so as to ensure privacy. For example, the first network is a private network, and the second network is a public network. When an employee performs technology development, a terminal device used by the employee needs to be forbidden from accessing the public network via the private network of a company, to avoid technology leakage.

It can be learned that, during actual application, it is necessary to manage and control whether the terminal device has the permission to access the second network via the first network, so as to satisfy use requirements in different scenarios.

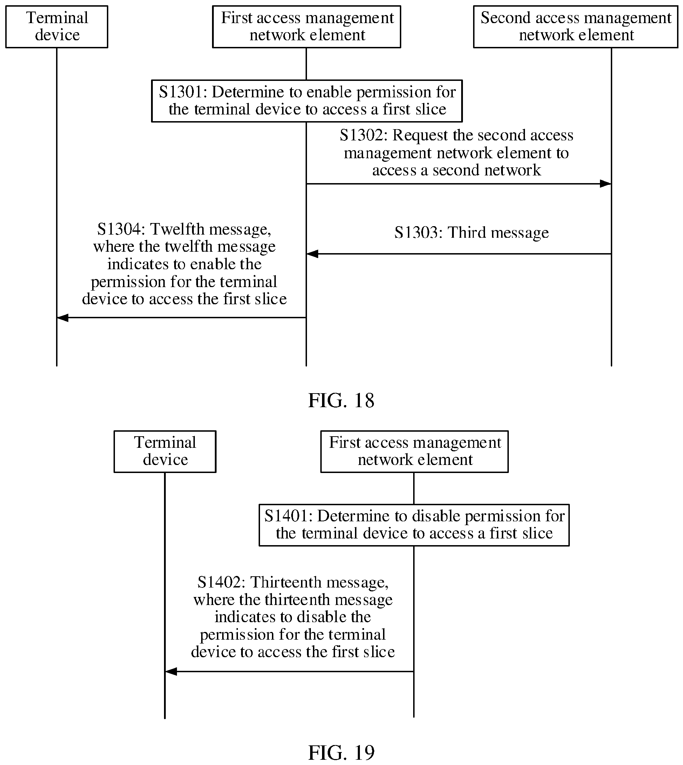

Therefore, embodiments of this application provide the following technical solutions shown in FIG. 17 and FIG. 19. The technical solution shown in FIG. 17 is for enabling permission for a terminal device to access a first slice. The technical solution shown in FIG. 19 is for disabling permission for a terminal device to access a first slice. In this way, the permission for the terminal device to access the first slice may be managed and controlled, to indirectly manage and control the permission for the terminal device to access the second network via the first network.

It should be understood that the technical solution shown in FIG. 17 or FIG. 19 may be used in combination with any one of the technical solutions shown in FIG. 8 to FIG. 16.

FIG. 17 shows a network interworking method according to an embodiment of this application. The method includes the following steps.

S1201: A first access management network element determines to enable permission for a terminal device to access a first slice.

It should be understood that the enable may be alternatively replaced with similar descriptions such as provide (provide), grant (grant), accept (accept), able (able), or activate (activate). This is not limited herein.

Optionally, step S601 may be performed in any one of the following implementations.

Implementation 1: The first access management network element receives first indication information sent by a management system, where the first indication information indicates to enable the permission for the terminal device to access the first slice.

For example, the management system may be an operations, maintenance and administration (operations, administration and maintenance) system.

Implementation 2: The first access management network element determines, based on a locally configured policy, to enable the permission for the terminal device to access the first slice.

For example, the locally configured policy may be determined based on time or a location of the terminal device.

Implementation 3: The first access management network element receives a fourteenth message sent by a second access management network element. The fourteenth message indicates to enable permission to access one or more second slices corresponding to the first slice.

S1202: The first access management network element sends a twelfth message to the terminal device. Correspondingly, the terminal device receives the twelfth message sent by the first access management network element.

The twelfth message indicates to enable the permission for the terminal device to access the first slice.

In a possible implementation, the twelfth message includes allowed NSSAI, and the allowed NSSAI includes S-NSSAI of the first slice.

For example, the twelfth message may be a user equipment configuration update command (UE configuration update command) message, a downlink NAS transport message (DL NAS transport message), or another NAS message.

Optionally, before performing step S602, the first access management network element may alternatively first send a registration request message to the second access management network element. For a specific implementation of the registration request message, refer to the second message in the foregoing registration scenario. Then, after the first access management network element receives a registration accept message sent by the second access management network element, the first access management network element performs step S602.

Based on the embodiment shown in FIG. 17, the first access management network element enables, by using the twelfth message, the terminal device to learn that the terminal device has the permission to access the first slice. Therefore, the allowed NSSAI locally maintained by the terminal device includes the S-NSSAI of the first slice. Further, when the terminal device needs to use a related service in the second network, the terminal device may initiate a related procedure of accessing the first slice (for example, step S101 in FIG. 8).

With reference to FIG. 18, the following describes another network interworking method in a registration scenario by using an example. As shown in FIG. 18, the method includes the following steps.

For S1301, refer to descriptions of S1201 in FIG. 17.

For S1302, refer to descriptions of S 102 in FIG. 9.

For S1303, refer to descriptions of S201 in FIG. 9.

For S 1304, refer to descriptions of S 1202 in FIG. 17.

As shown in FIG. 18, when the first access management network element determines to enable the permission for the terminal device to access the first slice, the first access management network element first requests the second access management network element to access the second network. When the first access management network element is allowed to access the second network, the first access management network element sends the twelfth message to the terminal device, to enable the permission for the terminal device to access the first slice. In this way, it is ensured that the terminal device can access the first slice when the terminal device subsequently needs to access the first slice.

Optionally, in a registration procedure, if the second access management network element indicates, to the first access management network element, that access to the second network is not allowed or use of a service in the second network is not allowed, the first access management network element does not send the twelfth message to the terminal device, to prevent the terminal device from initiating an unnecessary procedure (for example, the related procedure of accessing the first slice), so that unnecessary signaling overheads are reduced.

FIG. 19 shows a network interworking method according to an embodiment of this application. The method includes the following steps.

S1401: A first access management network element determines to disable permission for a terminal device to access a first slice.

It should be understood that, to disable permission may be described in another manner, for example, not to provide (Not provide) the permission, to abolish/revoke (revoke) the permission, to reject (reject) the permission, to disable (disable) the permission, or to deactivate (deactivate) the permission. This is not limited in this embodiment of this application.

Optionally, step S1401 may be performed in any one of the following implementations.

Implementation 1: The first access management network element receives second indication information sent by a management system, where the second indication information indicates to disable the permission for the terminal device to access the first slice.

Implementation 2: The first access management network element determines, based on a locally configured policy, to disable the permission for the terminal device to access the first slice.

For example, the locally configured policy may be determined based on time or a location of the terminal device.

Implementation 3: The first access management network element receives a fifteenth message sent by a second access management network element, where the fifteenth message is for disabling permission to all second slices corresponding to the first slice.

Optionally, after the first access management network element determines to disable the permission for the terminal device to access the first slice, if the terminal device establishes a first PDU session on the first slice, the first access management network element needs to perform a corresponding PDU session release procedure, to release the first PDU session and a second PDU session.

Optionally, after determining to disable the permission for the terminal device to access the first slice, the first access management network element may initiate a deregistration procedure associated with second identity information in the second network. For example, the first access management network element sends a deregistration request message to the second access management network element. Then, the first access management network element receives a deregistration complete message sent by the second access management network element.

Optionally, when identity information of a plurality of terminal devices is associated with same second identity information, if at least one of the plurality of terminal devices has the permission to access the first slice, the first access management network element should not initiate the deregistration procedure associated with the second identity information in the second network. In this way, normal use of the terminal device that has the permission to access the first slice is not affected.

Optionally, after receiving the deregistration complete message, the first access management network element deletes security context information or the like related to the second identity information. In this way, the first access management network element may be prevented from storing unnecessary information, and storage space of the first access management network element is saved.

Optionally, after receiving the deregistration complete message, the first access management network element may further delete an association relationship between the second identity information and identifier information of the first slice. This is equivalent to decoupling the second identity information from the first slice, and the first access management network element may bind another network slice by using the second identity information.

Optionally, after receiving the deregistration complete message, the first access management network element may further delete an association relationship between the second identity information and first identity information. This is equivalent to recycling the second identity information, and the first access management network element may use the second identity information to access the second network on behalf of another terminal device in the first network.

S1402: The first access management network element sends a thirteenth message to the terminal device. Correspondingly, the terminal device receives the thirteenth message sent by the first access management network element.

The thirteenth message indicates to disable the permission for the terminal device to access the first slice.

In a possible implementation, the thirteenth message includes rejected NSSAI, and the rejected NSSAI includes S-NSSAI of the first slice.

For example, the thirteenth message may be a user equipment configuration update command (UE configuration update command) message, a downlink NAS transport message (DL NAS transport message), or another NAS message.

Based on the embodiment shown in FIG. 19, the first access management network element may disable, by using the thirteenth message, the permission for the terminal device to access the first slice, so as to manage and control access of the terminal device to the first slice.

The foregoing mainly describes the solutions provided in embodiments of this application from the perspective of the methods. It may be understood that, to implement the foregoing functions, the first access management network element and the terminal device include corresponding hardware structures and/or software modules for performing the functions. With reference to the units and algorithm steps described in embodiments disclosed in this application, embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in embodiments of this application.

In this embodiment of this application, function units of the first access management network element and the terminal device may be divided based on the foregoing method examples. For example, each function unit may be obtained through division based on a corresponding function, or two or more functions may be integrated into one processing unit. The integrated unit may be implemented in a form of hardware, or may be implemented in a form of a software functional unit. It should be noted that, in this embodiment of this application, division into the units is an example, and is merely a logical function division. In actual implementation, another division manner may be used.

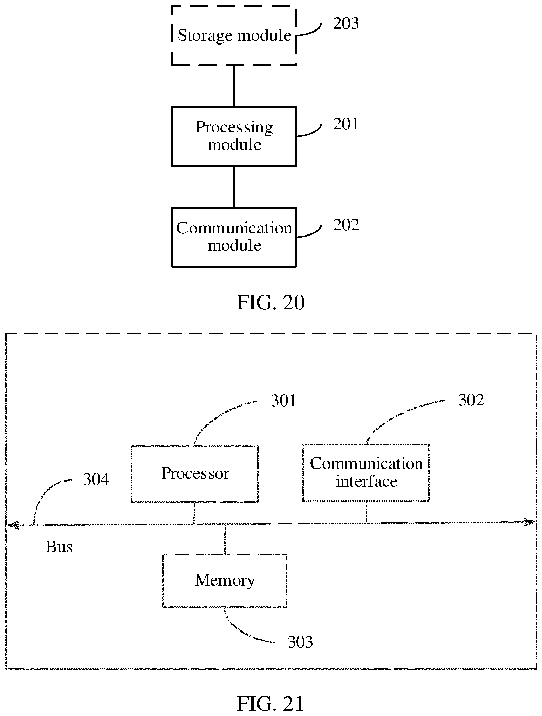

FIG. 20 shows a communication apparatus according to an embodiment of this application. The communication apparatus includes a processing module 201 and a communication module 202.

For example, the communication apparatus is a first access management network element. The processing module 201 is configured to parse a message (for example, a first message), generate a message (for example, a second message), and perform step S402 in FIG. 11, step S512 in FIG. 12A and FIG. 12B, step S1201 in FIG. 17, step S1301 in FIG. 18, step S1401 in FIG. 19, or another processing operation that needs to be performed by the first access management network element. The communication module 202 is configured to perform steps S101 and S102 in FIG. 8, steps S201 and S202 in FIG. 9, steps S301 and S302 in FIG. 10, steps S401 and S403 in FIG. 11, steps S501, S502, S511, S513, S514, S518, and S519 in FIG. 12A and FIG. 12B, steps S801, S802, S811, and S812 in FIG. 14A and FIG. 14B, steps S902 and S903 in FIG. 15 (a), steps S1002 and S1003 in FIG. 15 (b), steps S1101 and S1102 in FIG. 16, step S1202 in FIG. 17, steps S1302 to S1304 in FIG. 18, step S1402 in FIG. 19, and/or another communication operation that needs to be performed by the first access management network element.

For example, the communication apparatus is a terminal device. The processing module 201 is configured to generate a message (for example, a first message), parse a message (for example, a sixth message), and/or perform another processing operation that needs to be performed by the terminal device. The communication module 202 is configured to perform step S101 in FIG. 8, step S202 in FIG. 9, step S302 in FIG. 10, step S403 in FIG. 11, steps S501 and S520 in FIG. 12A and FIG. 12B, step S601 in FIG. 13(a), step S704 in FIG. 13(b), step S801 and S812 in FIG. 14A and FIG. 14B, step S901 in FIG. 15(a), step S1004 in FIG. 15(b), step S1102 in FIG. 16, step S1202 in FIG. 17, step S1304 in FIG. 18, step S1402 in FIG. 19, and/or another communication operation that needs to be performed by the terminal device.

For example, the communication apparatus is an N3IWF. The processing module 201 is configured to obtain a first routing rule in a process in which a second network establishes a second PDU session for a terminal device. The first routing rule is for forwarding a data packet of the second PDU session. The communication module 202 is configured to forward the data packet of the second PDU session based on the first routing rule.

In a possible design, the first routing rule indicates to forward an uplink data packet whose source address is an IP address of the second PDU session to a second user plane network element serving the second PDU session.

In a possible design, the communication module 202 is specifically configured to receive an uplink data packet of the second PDU session from a first user plane network element or a first access management network element in a first network; and send, based on the first routing rule, the uplink data packet of the second PDU session to the second user plane network element serving the second PDU session.

In a possible design, the first routing rule alternatively indicates to forward a downlink data packet whose destination address is the IP address of the second PDU session to the first access management network element or the first user plane network element in the first network.

In a possible design, the communication module is specifically configured to receive a downlink data packet of the second PDU session from the second user plane network element serving the second PDU session; and send the uplink data packet of the second PDU session to the first user plane network element or the first access management network element in the first network based on the first routing rule.

Optionally, the communication apparatus may further include a storage module 203, configured to store program code and data of the communication apparatus. The data may include but is not limited to original data, intermediate data, or the like.

The processing module 201 may be a processor or a controller, such as a central processing unit (Central Processing Unit, CPU), a general-purpose processor, a digital signal processor (Digital Signal Processor, DSP), an application-specific integrated circuit (Application Specific Integrated Circuit, ASIC), a field programmable gate array (Field Programmable Gate Array, FPGA), or another programmable logical device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

The communication module 202 may be a communication interface, a transceiver, a transceiver circuit, or the like. Descriptions are provided below by using an example in which the communication module 202 is a communication interface. In a specific implementation, the communication interface may include a plurality of interfaces, for example, may include an interface between a base station and a terminal and/or another interface.

The storage module 203 may be a memory.

When the processing module 201 is a processor, the communication module 202 is a communication interface, and the storage module 203 is a memory, the communication apparatus in this embodiment of this application may be shown in FIG. 21.

Refer to FIG. 21. The communication apparatus includes a processor 301, a communication interface 302, and a memory 303. Optionally, the communication apparatus may further include a bus 304. The communication interface 302, the processor 301, and the memory 303 may be connected to each other by using the bus 304. The bus 304 may be a peripheral component interconnect (peripheral component interconnect, PCI) bus, an extended industry standard architecture (extended industry standard architecture, EISA) bus, or the like. The bus 304 may include an address bus, a data bus, a control bus, and the like. For ease of representation, only one bold line is used for representation in FIG. 21, but this does not mean that there is only one bus or only one type of bus.

Optionally, an embodiment of this application further provides a computer program product carrying computer instructions. When the computer instructions are run on a computer, the computer is enabled to perform the methods in FIG. 8 to FIG. 19.

Optionally, an embodiment of this application further provides a computer-readable storage medium. The computer-readable storage medium stores computer instructions, and when the computer instructions are run on a computer, the computer is enabled to perform the methods in FIG. 8 to FIG. 19.

Optionally, an embodiment of this application further provides a chip, including a processing circuit and a transceiver pin. The processing circuit and the transceiver pin are configured to implement the methods in FIG. 8 to FIG. 19. The processing circuit is configured to perform a processing action in the corresponding method, and the transceiver pin is configured to perform a receiving/sending action in the corresponding method.

Optionally, an embodiment of this application further provides a communication system. The communication system includes a first access management network element and an N3IWF. The first access management network element is configured to perform any method shown in FIG. 8 to FIG. 19. The N3IWF is configured to perform any method shown in FIG. 12A to FIG. 15(b).

A person of ordinary skill in the art may understand that all or some of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of devices. Some or all of the units may be selected based on actual requirements to achieve the objectives of the solutions of embodiments.

In addition, function units in embodiments of this application may be integrated into one processing unit, or each of the function units may exist alone physically, or two or more units are integrated into one unit. The integrated unit may be implemented as hardware, or may be implemented as a combination of hardware and a software functional unit.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions in this application essentially or the part contributing to the conventional technology may be implemented in a form of a software product. The computer software product is stored in a readable storage medium, such as a floppy disk, a hard disk or an optical disc of a computer, and includes several instructions for instructing a computer device (which may be a personal computer, a server, a network device, or the like) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A network interworking method, wherein the method comprises:
receiving, by a first access management network element in a first network, identifier information that is of a first slice and that is sent by a terminal device, wherein the first slice is a slice related to a service in a second network; and
requesting, by the first access management network element based on the identifier information of the first slice, a second access management network element in the second network to access the second network.

2. The method according to claim 1, wherein the method further comprises:
obtaining, by the first access management network element, first identity information; and
sending, by the first access management network element, second identity information to the second access management network element, wherein the first identity information is for identifying the terminal device in the first network, and the first identity information is different from the second identity information.

3. The method according to claim 2, wherein the first identity information is at least one of an international mobile subscriber identity IMSI, a subscription permanent identifier SUPI, a subscription concealed identifier SUCI, and a globally unique temporary user equipment identity GUTI; and the second identity information is at least one of the following: at least one of an IMSI, an SUPI, an SUCI, and a GUTI.

4. The method according to claim 2 or 3, wherein the method further comprises:
establishing, by the first access management network element, an association relationship between the first identity information and the second identity information.

5. The method according to any one of claims 1 to 4, wherein the first slice is a slice in the first network, and the requesting, by the first access management network element based on the identifier information of the first slice, a second access management network element in the second network to access the second network comprises:
requesting, by the first access management network element based on the identifier information of the first slice, the second access management network element in the second network to access a second slice in the second network, wherein the second slice is associated with the first slice.

6. The method according to any one of claims 1 to 5, wherein the identifier information of the first slice is comprised in a first message, and the first message is for requesting to register with the first network.

7. The method according to claim 6, wherein the requesting, by the first access management network element based on the identifier information of the first slice, a second access management network element in the second network to access the second network comprises:
sending, by the first access management network element, a second message to the second access management network element in the second network based on the identifier information of the first slice, wherein the second message is for requesting to register with the second network.

8. The method according to claim 7, wherein the method further comprises:
receiving, by the first access management network element, a third message sent by the second access management network element, wherein the third message indicates that registration succeeds; and
sending, by the first access management network element, a fourth message to the terminal device based on the third message, wherein the fourth message indicates that the terminal device is allowed to have permission to access the first slice.

9. The method according to claim 8, wherein that the fourth message is for allowing the terminal device to have permission to access the first slice comprises:
the fourth message comprises the identifier information of the first slice.

10. The method according to any one of claims 1 to 6, wherein the identifier information of the first slice is comprised in the first message, and the first message is for requesting to establish a first protocol data unit PDU session associated with the first slice.

11. The method according to claim 10, wherein the requesting, by the first access management network element based on the identifier information of the first slice, a second access management network element in the second network to access the second network comprises:
sending, by the first access management network element, a second message to the second access management network element in the second network based on the identifier information of the first slice, wherein the second message is for requesting to establish a second PDU session related to the first slice.

12. The method according to claim 11, wherein the first message comprises an identifier of the first PDU session, and the second message comprises an identifier of the second PDU session.

13. The method according to claim 11 or 12, wherein the method further comprises:
receiving, by the first access management network element, a seventh message sent by the second access management network element, wherein the seventh message indicates that the second PDU session is successfully established; and
sending, by the first access management network element, a ninth message to the terminal device based on the seventh message, wherein the ninth message indicates that the first PDU session is successfully established.

14. The method according to claim 13, wherein the method further comprises:
obtaining, by the first access management network element, an IP address of the second PDU session from the second access management network element; and
sending, by the first access management network element, the IP address of the second PDU session to a first user plane network element in the first network.

15. The method according to any one of claims 1 to 14, wherein the method further comprises:
determining, by the first access management network element, to enable the permission for the terminal device to access the first slice; and
sending, by the first access management network element, a twelfth message to the terminal device, wherein the twelfth message indicates to enable the permission for the terminal device to access the first slice.

16. The method according to claim 15, wherein that the twelfth message indicates to enable the permission for the first slice comprises:
the twelfth message comprises the identifier information of the first slice.

17. The method according to any one of claims 1 to 16, wherein the first network is a public network, and the second network is a non-public network; or the first network is a non-public network, and the second network is a public network.

18. A communication apparatus, wherein the communication apparatus is deployed in a first network, and the communication apparatus comprises a communication module and a processing module, wherein
the communication module is configured to receive identifier information that is of a first slice and that is sent by a terminal device, wherein the first slice is a slice related to a service in a second network; and
the processing module is configured to control, based on the identifier information of the first slice, the communication module to request a second access management network element in the second network to access the second network.

19. The apparatus according to claim 18, wherein
the processing module is further configured to obtain first identity information; and
the communication module is further configured to send second identity information to the second access management network element, wherein the first identity information is for identifying the terminal device in the first network, and the first identity information is different from the second identity information.

20. The apparatus according to claim 19, wherein the first identity information is at least one of an international mobile subscriber identity IMSI, a subscription permanent identifier SUPI, a subscription concealed identifier SUCI, and a globally unique temporary user equipment identity GUTI; and the second identity information is at least one of an IMSI, an SUPI, an SUCI, and a GUTI.

21. The apparatus according to claim 19 or 20, wherein
the processing module is further configured to establish an association relationship between the first identity information and the second identity information.

22. The apparatus according to any one of claims 18 to 21, wherein the first slice is a slice in the first network;
the processing module is specifically configured to control, based on the identifier information of the first slice, the communication module to request the second access management network element in the second network to access a second slice in the second network, wherein the second slice is associated with the first slice.

23. The apparatus according to any one of claims 18 to 22, wherein the identifier information of the first slice is comprised in a first message, and the first message is for requesting to register with the first network.

24. The apparatus according to claim 23, wherein
the processing module is specifically configured to control, based on the identifier information of the first slice, the communication module to send a second message to the second access management network element in the second network, wherein the second message is for requesting to register with the second network.

25. The apparatus according to claim 24, wherein
the communication module is further configured to receive a third message sent by the second access management network element, wherein the third message indicates that registration succeeds; and send a fourth message to the terminal device based on the third message, wherein the fourth message indicates that the terminal device is allowed to have permission to access the first slice.

26. The apparatus according to claim 25, wherein that the fourth message is for allowing the terminal device to have permission to access the first slice comprises:
the fourth message comprises the identifier information of the first slice.

27. The apparatus according to any one of claims 18 to 22, wherein the identifier information of the first slice is comprised in the first message, and the first message is for requesting to establish a first protocol data unit PDU session associated with the first slice.

28. The apparatus according to claim 27, wherein
the processing module is specifically configured to control, based on the identifier information of the first slice, the communication module to send a second message to the second access management network element in the second network, wherein the second message is for requesting to establish a second PDU session.

29. The apparatus according to claim 28, wherein the first message comprises an identifier of the first PDU session, and the second message comprises an identifier of the second PDU session.

30. The apparatus according to claim 28 or 29, wherein
the communication module is further configured to receive a seventh message sent by the second access management network element, wherein the seventh message indicates that the second PDU session is successfully established; and send a ninth message to the terminal device based on the seventh message, wherein the ninth message indicates that the first PDU session is successfully established.

31. The apparatus according to claim 30, wherein
the communication module is further configured to obtain an IP address of the second PDU session from the second access management network element; and send the IP address of the second PDU session to a first user plane network element in the first network.

32. The apparatus according to any one of claims 18 to 31, wherein
the processing module is further configured to determine to enable the permission for the terminal device to access the first slice; and
the communication module is further configured to send a twelfth message to the terminal device, wherein the twelfth message indicates to enable the permission for the terminal device to access the first slice.

33. The apparatus according to claim 32, wherein that the twelfth message indicates to enable the permission for the first slice comprises:
the twelfth message comprises the identifier information of the first slice.

34. The apparatus according to any one of claims 18 to 33, wherein the first network is a public network, and the second network is a non-public network; or the first network is a non-public network, and the second network is a public network.

35. A communication apparatus, comprising a processor and a memory, wherein the memory stores computer program instructions, and when reading the computer program instructions, the processor performs the method according to any one of claims 1 to 17.

36. A computer-readable storage medium, wherein the computer-readable storage medium comprises computer instructions, and when the computer instructions are run on a computer, the computer is enabled to perform the method according to any one of claims 1 to 17.

37. A computer program product, wherein the computer program product comprises computer instructions, and when the computer program product runs on a computer, the computer is enabled to perform the method according to any one of claims 1 to 17.

38. A chip, wherein the chip comprises a processing circuit and a transceiver pin, the processing circuit is configured to perform a processing operation in the method according to any one of claims 1 to 17, and the transceiver pin is configured to perform a communication operation in the method according to any one of claims 1 to 17.
